# EUROPÄISCHE PATENTSCHRIFT

(11) **EP 4 281 287 B1**
(45) Veröffentlichungstag und Bekanntmachung des Hinweises auf die Patenterteilung: **11.11.2026**
(21) Anmeldenummer: 22701157.4
(22) Anmeldetag: 10.01.2022
(51) Int. Cl.: B32B 17/10, B60J 1/02, C03C 17/36, G02B 27/01

(54) **PROJEKTIONSANORDNUNG FÜR EIN HEAD-UP-DISPLAY (HUD) MIT P-POLARISIERTER STRAHLUNG**
PROJECTION ASSEMBLY FOR A HEAD-UP DISPLAY (HUD) WITH P-POLARIZED RADIATION
DISPOSITIF DE PROJECTION POUR UN AFFICHAGE TÊTE HAUTE (HUD) À RAYONNEMENT P-POLARISÉ

(30) Priorität: 21.01.2021 EP 21152651
(43) Veröffentlichungstag der Anmeldung: 29.11.2023
(73) Patentinhaber: Saint-Gobain Sekurit France, 60150 Thourotte (FR)
(72) Erfinder: SCHMADTKE, Lisa, 52146 Würselen (DE); GILLESSEN, Stephan, 52477 Alsdorf (DE); DO ROSARIO, Jefferson, 52064 Aachen (DE); HAGEN, Jan, 53123 Bonn (DE)
(74) Vertreter: Feist, Florian Arno
(86) Internationale Anmeldenummer: PCT/EP2022/050322
(87) Internationale Veröffentlichungsnummer: WO 2022/157021

(56) Entgegenhaltungen:
- CN-A- 106 630 688
- CN-A- 106 646 874

## Beschreibung

Die Erfindung betrifft eine Projektionsanordnung für ein Head-Up-Display und ihre Verwendung.

Moderne Automobile werden in zunehmendem Maße mit sogenannten Head-Up-Displays (HUDs) ausgestattet. Mit einem Projektor, typischerweise im Bereich des Armaturenbretts, werden Bilder auf die Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit, Navigations- oder Warnhinweise, die der Fahrer wahrnehmen kann, ohne seinen Blick von der Fahrbahn wenden zu müssen. Head-Up-Displays können so wesentlich zur Steigerung der Verkehrssicherheit beitragen.

HUD-Projektoren werden überwiegend mit s-polarisierter Strahlung betrieben und bestrahlen die Windschutzscheibe mit einem Einfallswinkel von etwa 65%, was nahe dem Brewster-Winkel für einen Luft-Glas-Übergang liegt (56,5° für Kalk-Natron-Glas). Dabei tritt das Problem auf, dass das Projektorbild an beiden externen Oberflächen der Windschutzscheibe reflektiert wird. Dadurch tritt neben dem gewünschten Hauptbild auch ein leicht versetztes Nebenbild auf, das sogenannte Geisterbild ("Ghost"). Das Problem wird üblicherweise dadurch gemindert, dass die Oberflächen in einem Winkel zueinander eingeordnet werden, insbesondere durch Verwendung einer keilartigen Zwischenschicht zur Lamination der als Verbundscheibe ausgebildeten Windschutzscheiben, so dass Hauptbild und Geisterbild einander überlagert werden. Verbundgläser mit Keilfolien für HUDs sind beispielsweise aus WO2009/071135A1, EP1800855B1 oder EP1880243A2 bekannt.

Die Keilfolien sind kostspielig, so dass die Herstellung einer solchen Verbundscheibe für ein HUD recht kostenintensiv ist. Es besteht daher Bedarf an HUD-Projektionsanordnungen, die mit Windschutzscheiben ohne Keilfolien auskommen. So ist es beispielsweise möglich, den HUD-Projektor mit p-polarisierter Strahlung zu betreiben, welche an den Scheibenoberflächen nicht wesentlich reflektiert wird. Als Reflexionsfläche für die p-polarisierte Strahlung weist die Windschutzscheibe stattdessen eine Reflexionsbeschichtung auf. Die DE102014220189A1 offenbart eine solche HUD-Projektionsanordnung, welche mit p-polarisierter Strahlung betrieben wird. Als reflektierende Struktur wird unter anderem eine einzelne metallische Schicht vorgeschlagen mit einer Dicke von 5 nm bis 9 nm, beispielsweise aus Silber oder Aluminium. Auch die WO2019046157A1 offenbart ein HUD mit p-polarisierter Strahlung, wobei eine Reflexionsbeschichtung mit mindestens zwei metallischen Schichten verwendet wird.

US2017242247A1 offenbart eine weitere HUD-Projektionsanordnung mit einer Reflexionsbeschichtung für p-polarisierte Strahlung. Die Reflexionsbeschichtung kann eine oder mehrere leitfähige Silberschichten enthalten, darüber hinaus dielektrische Schichten. Das Reflexionsspektrum weist im relevanten Spektralbereich aber eine deutlich gekrümmte Form auf, so dass der Reflexionsgrad relativ stark wellenlängenabhängig ist. Dies ist nachteilhaft im Hinblick auf eine farbneutrale Darstellung der HUD-Projektion.

Es sind eine Reihe von Projektionsanordnungen mit besseren Reflexionseigenschaften vorgeschlagen worden, wobei diese Reflexionseigenschaften insbesondere durch eine Optimierung der Reflexionsbeschichtung erreicht wurden. Beispielsweise wurden in WO2019179683A1, WO2020094422A1, WO2020094423A1 Reflexionsbeschichtungen mit mehreren Silberschichten vorgeschlagen.

In WO2021004685A1 und der nachveröffentlichten WO2021104800A1 sind Reflexionsbeschichtungen mit einer einzigen Silberschicht offenbart, mit denen gute Reflexionseigenschaften gegenüber p-polarisierter Strahlung erreicht werden. Reflexionsbeschichtungen mit einer einzigen Silberschicht haben gegenüber solchen mit mehreren Silberschichten den Vorteil, dass sie weniger komplex sind und daher einfacher und kostengünstiger erzeugt werden können.

Aus CN106630688A und CN106646874A sind Projektionsanordnungen bekannt aus Windschutzscheiben und Projektoren mit p-polarisierter Strahlung. Die Windschutzscheiben tragen dabei auf der innenraumseitigen Oberfläche der Innenscheibe eine rein dielektrische Reflexionsbeschichtung zur Reflexion der p-polarisierten Strahlung. Darüber hinaus sind die Windschutzscheiben mit beheizbaren Beschichtungen ausgestattet, welche Silberschichten enthalten.

Es sind auch Fahrzeugscheiben bekannt, welche mit emissivitätsmindernden Beschichtungen (sogenannte LowE-Beschichtungen ausgestattet sind, welche durch Reflexion von Wärmestrahlung den thermischen Komfort im Innenraum des Fahrzeugs verbessern. Transparente emissivitätsmindernde Beschichtungen können beispielsweise eine funktionelle Schicht auf Basis von Indium-Zinn-Oxid (ITO) enthalten. Beispielhaft sei auf WO2013131667A1 und WO2018206236A1 verwiesen.

Es besteht weiterhin Bedarf an verbesserten Projektionsanordnungen für HUDs, die mit p-polarisierter Strahlung betrieben werden, wobei die Windschutzscheibe ein weiter verbessertes Reflexionsverhalten gegenüber p-polarisierter Strahlung aufweist. Die Windschutzscheibe soll insbesondere eine hohe Transmission im sichtbaren Spektralbereich sowie eine hohe Reflektivität gegenüber p-polarisierter Strahlung aufweisen und eine farbneutrale Darstellung erlauben. Außerdem soll die Windschutzscheibe einen hohen thermischen Komfort im Fahrzeug gewährleisten. Der vorliegenden Erfindung liegt die Aufgabe zugrunde, eine solche verbesserte Projektionsanordnung bereitzustellen.

Die Aufgabe der vorliegenden Erfindung wird erfindungsgemäß durch eine Projektionsanordnung gemäß Anspruch 1 gelöst. Bevorzugte Ausführungen gehen aus den Unteransprüchen hervor.

Kern der Erfindung ist die Tatsache, dass die Windschutzscheibe mit einer Kombination einer Reflexionsbeschichtung mit genau einer Silberschicht und einer emissivitätsmindernden Beschichtung mit einer TCO-Schicht ausgestattet ist. Zur Erzeugung des HUD-Bildes wird p-polarisierte Strahlung verwendet. Die Reflexionsbeschichtung ist dafür vorgesehen, die p-polarisierte Strahlung zu reflektieren. Da der für HUD-Projektionsanordnungen typische Einfallswinkel von etwa 65° dem Brewsterwinkel für einen Luft-Glas-Übergang (56,5°, Kalk-Natron-Glas) relativ nahekommt, wird p-polarisierte Strahlung von den Scheibenoberflächen kaum reflektiert, sondern hauptsächlich von der leitfähigen Beschichtung. Geisterbilder treten daher nicht oder kaum wahrnehmbar auf, so dass auf die Verwendung einer kostspieligen Keilfolie verzichtet werden kann. Außerdem ist das HUD-Bild auch für Träger von polarisationsselektiven Sonnenbrillen erkennbar, welche typischerweise nur p-polarisierte Strahlung passieren lassen und s-polarisierte Strahlung blocken. Die erfindungsgemäße Reflexionsbeschichtung mit der einzelnen Silberschicht ist für eine gute und farbneutrale HUD-Darstellung geeignet, was an sich bereits bekannt war. Die einzelne Silberschicht setzt die Lichttransmission nicht übermäßig herab, so dass die Scheibe weiterhin als Windschutzscheibe verwendet werden kann. Die Erfinder haben nun überraschend festgestellt, dass die Anwesenheit der emissivitätsmindernden Beschichtung zu einer weiteren Verbesserung der Reflexionseigenschaften führt, insbesondere zu einer Glättung des Reflexionsspektrums, so dass eine noch farbneutralere HUD-Darstellung ermöglicht wird. Darüber hinaus verbessert die emissivitätsmindernde Beschichtung den thermischen Komfort im Fahrzeug, indem im Sommer die Einstrahlung von Wärmestrahlung und im Winter die Abstrahlung von Wärme verringert wird. Das sind große Vorteile der vorliegenden Erfindung.

Die erfindungsgemäße Projektionsanordnung für ein Head-Up-Display (HUD) umfasst mindestens eine Windschutzscheibe und einen Projektor (HUD-Projektor). Wie bei HUDs üblich bestrahlt der Projektor einen Bereich der Windschutzscheibe, wo die Strahlung in Richtung des Betrachters (Fahrers) reflektiert wird, wodurch ein virtuelles Bild erzeugt wird, welches der Betrachter von ihm aus gesehen hinter der Windschutzscheibe wahrnimmt. Der durch den Projektor bestrahlbare Bereich der Windschutzscheibe wird als HUD-Bereich bezeichnet. Die Strahlrichtung des Projektors kann typischerweise durch Spiegel variiert werden, insbesondere vertikal, um die Projektion an die Körpergröße des Betrachters anzupassen. Der Bereich, in dem sich die Augen des Betrachters bei gegebener Spiegelstellung befinden müssen, wird als Eyeboxfenster bezeichnet. Dieses Eyeboxfenster kann durch Verstellung der Spiegel vertikal verschoben werden, wobei der gesamte dadurch zugängliche Bereich (das heißt die Überlagerung aller möglichen Eyeboxfenster) als Eyebox bezeichnet wird. Ein innerhalb der Eyebox befindlicher Betrachter kann das virtuelle Bild wahrnehmen. Damit ist natürlich gemeint, dass sich die Augen des Betrachters innerhalb der Eyebox befinden müssen, nicht etwa der gesamte Körper.

Die hier verwendeten Fachbegriffe aus dem Bereich der HUDs sind dem Fachmann allgemein bekannt. Für eine ausführliche Darstellung sei auf die Dissertation "Simulationsbasierte Messtechnik zur Prüfung von Head-Up Displays" von Alexander Neumann am Institut für Informatik der Technischen Universität München (München: Universitätsbibliothek der TU München, 2012) verwiesen, insbesondere auf Kapitel 2 "Das Head-Up Display".

Die Windschutzscheibe umfasst eine Außenscheibe und eine Innenscheibe, die über eine thermoplastische Zwischenschicht miteinander verbunden sind. Die Windschutzscheibe ist dafür vorgesehen, in einer Fensteröffnung eines Fahrzeugs den Innenraum gegenüber der äußeren Umgebung abzutrennen. Mit Innenscheibe wird im Sinne der Erfindung die dem Fahrzeuginnenraum zugewandte Scheibe der Windschutzscheibe bezeichnet. Mit Außenscheibe wird die der äußeren Umgebung zugewandte Scheibe bezeichnet. Die Windschutzscheibe ist bevorzugt die Windschutzscheibe eines Kraftfahrzeugs, insbesondere eines Personen- oder Lastkraftwagens.

Die Windschutzscheibe weist eine Oberkante und eine Unterkante auf sowie zwei dazwischen verlaufende Seitenkanten. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Die Oberkante wird häufig auch als Dachkante und die Unterkante als Motorkante bezeichnet.

Die Außenscheibe und die Innenscheibe weisen jeweils eine außenseitige und eine innenraumseitige Oberfläche auf und eine dazwischen verlaufende, umlaufende Seitenkante. Mit außenseitiger Oberfläche wird im Sinne der Erfindung diejenige Hauptfläche bezeichnet, welche dafür vorgesehen ist, in Einbaulage der äußeren Umgebung zugewandt zu sein. Mit innenraumseitiger Oberfläche wird im Sinne der Erfindung diejenige Hauptfläche bezeichnet, welche dafür vorgesehen ist, in Einbaulage dem Innenraum zugewandt zu sein. Die innenraumseitige Oberfläche der Außenscheibe und die außenseitige Oberfläche der Innenscheibe sind einander zugewandt und durch die thermoplastische Zwischenschicht miteinander verbunden.

Der Projektor ist auf den HUD-Bereich der Windschutzscheibe gerichtet. Er bestrahlt den HUD-Bereich mit Strahlung im sichtbaren Bereich des elektromagnetischen Spektrums zur Erzeugung der HUD-Projektion, insbesondere im Spektralbereich von 450 nm bis 650 nm, beispielsweise mit den Wellenlängen 473 nm, 550 nm und 630 nm (RGB). Der Projektor sendet erfindungsgemäß p-polarisierte Strahlung aus.

Die Windschutzscheibe ist erfindungsgemäß mit einer Reflexionsbeschichtung versehen, welche geeignet ist, p-polarisierte Strahlung zu reflektieren. Dadurch wird aus der Projektorstrahlung ein virtuelles Bild erzeugt, welches der Fahrer des Fahrzeugs von ihm aus gesehen hinter der Windschutzscheibe wahrnehmen kann. Die Reflexionsbeschichtung weist erfindungsgemäß genau eine elektrisch leitfähige Schicht auf Basis von Silber auf. Diese elektrisch leitfähige Schicht kann auch vereinfacht als Silberschicht bezeichnet werden. Es hat sich gezeigt, dass bereits mit solchen vergleichsweise einfachen Reflexionsbeschichtungen sehr gute Reflexionseigenschaften erreicht werden können. Die Reflexionsbeschichtung ist im Innern der Windschutzscheibe angeordnet, wie das bei korrosionsanfälligen Beschichtungen mit Silberschichten üblich ist. Die Reflexionsbeschichtung kann auf einer der Zwischenschicht zugewandten Oberflächen der beiden Scheiben, also der innenraumseitigen Oberfläche der Außenscheibe oder der außenseitigen Oberfläche der Innenscheibe, angeordnet beziehungsweise aufgebracht sein. Alternativ kann die Reflexionsbeschichtung auch innerhalb der thermoplastischen Zwischenschicht angeordnet sein, beispielsweise aufgebracht auf einer Trägerfolie, die zwischen zwei thermoplastischen Verbindefolien angeordnet ist.

Die auf die Windschutzscheibe gerichtete Projektorstrahlung wird hauptsächlich an der Reflexionsbeschichtung reflektiert, die intensitätsstärkste Reflexion findet also an der Reflexionsbeschichtung statt. Das heißt die Intensität der an der Reflexionsbeschichtung reflektierten Projektorstrahlung ist höher als die Intensität der an jeder anderen Grenzfläche reflektierten Strahlung, insbesondere höher als die Intensitäten der an der innenraumseitigen Oberfläche der Innenscheibe und der außenseitigen Oberfläche der Außenscheibe reflektierten Projektorstrahlung.

Die erfindungsgemäße Reflexionsbeschichtung weist aufgrund der elektrisch leitfähigen Silberschicht IR-reflektierende Eigenschaften auf, so dass sie als Sonnenschutzbeschichtung fungiert, welche die Aufheizung des Fahrzeuginnenraums dadurch verringert, dass sie infrarote Anteile der Sonnenstrahlung reflektiert, insbesondere im nahen Infrarotbereich, beispielsweise im Bereich von 800 nm bis 1500 nm. Die Reflexionsbeschichtung kann auch als Heizbeschichtung verwendet werden, wenn sie elektrisch kontaktiert wird, so dass ein Strom durch sie fließt, welcher die Reflexionsbeschichtung erwärmt.

Die Windschutzscheibe ist erfindungsgemäß außerdem mit einer emissivitätsmindernden Beschichtung versehen. Emissivitätsmindernde Beschichtungen sind auch als Wärmestrahlung reflektierende Beschichtungen, Beschichtungen niedriger Emissivität oder Low E-Beschichtungen (*low emissivity*) bekannt. Mit Emissivität wird das Maß bezeichnet, welches angibt, wie viel Wärmestrahlung die Scheibe in Einbaulage im Vergleich zu einem idealen Wärmestrahler (einem schwarzen Körper) in einen Innenraum abgibt. Emissivitätsmindernde Beschichtungen haben die Funktion, die Einstrahlung von Wärme in den Innenraum zu vermeiden (IR-Anteile der Sonnenstrahlung und insbesondere die thermische Strahlung der Scheibe selbst) und ebenso die Abstrahlung von Wärme aus dem Innenraum heraus. Sie weisen reflektierende Eigenschaften gegenüber infraroter Strahlung auf, insbesondere gegenüber Wärmestrahlung im Spektralbereich von 5 µm - 50 µm (vgl. auch Norm DIN EN 12898:2019-06). Dadurch wird der thermische Komfort im Innenraum wirkungsvoll verbessert. Die emissivitätsmindernden Beschichtungen können bei hohen Außentemperaturen und Sonneneinstrahlung die von der gesamten Scheibe in Richtung des Innenraums abgestrahlte Wärmestrahlung zumindest teilweise reflektieren. Bei niedrigen Außentemperaturen können sie die aus dem Innenraum abgestrahlte Wärmestrahlung reflektieren und somit die Wirkung der kalten Scheibe als Wärmesenke verringern. Dies ist in besonderem Maße bei Elektrofahrzeugen vorteilhaft, welche weniger Abwärme produzieren, welche zur Beheizung des Innenraums genützt werden kann.

Die emissivitätsmindernde Beschichtung ist erfindungsgemäß auf der innenraumseitigen Oberfläche der Innenscheibe angeordnet und weist mindestens eine, bevorzugt genau eine elektrisch leitfähige Schicht auf Basis eines transparenten leitfähigen Oxids (TCO, *transparent conductive oxide*) aufweist. Diese elektrisch leitfähige Schicht kann auch als TCO-Schicht bezeichnet werden.

Die mit der Reflexionsbeschichtung und der emissivitätsmindernden Beschichtung versehene Windschutzscheibe weist bevorzugt im Spektralbereich von 450 nm bis 650 nm einen gemittelten Reflexionsgrad gegenüber p-polarisierter Strahlung von mindestens 10% auf, besonders bevorzugt von mindestens 15%. Damit wird ein hinreichend intensitätsstarkes Projektionsbild erzeugt. Der Spektralbereich von 450 nm bis 650 nm wird zur Charakterisierung der Reflexionseigenschaften herangezogen aufgrund der für die HUD-Darstellung relevanten Wellenlängen (RGB: 473 nm, 550 nm, 630 nm). Der hohe Reflexionsgrad bei einem vergleichsweise einfachen Schichtaufbau ist ein großer Vorteil der vorliegenden Erfindung. Besonders gute Ergebnisse werden erzielt, wenn die Reflexionsgrad im gesamten Spektralbereich von 450 nm bis 650 nm mindestens 10 %, bevorzugt mindestens 15 % beträgt, so dass der Reflexionsgrad im angegeben Spektralbereich an keiner Stelle unter den angegebenen Werten liegt.

Der Reflexionsgrad beschreibt den Anteil der insgesamt eingestrahlten Strahlung, der reflektiert wird. Er wird in % angegeben (bezogen auf 100% eingestrahlte Strahlung) oder als einheitenlose Zahl von 0 bis 1 (normiert auf die eingestrahlte Strahlung). Aufgetragen in Abhängigkeit von der Wellenlänge bildet er das Reflexionsspektrum. Die Ausführungen zum Reflexionsgrad gegenüber p-polarisierter Strahlung beziehen sich im Rahmen der vorliegenden Erfindung auf den Reflexionsgrad gemessen mit einem Einfallswinkel von 65° zur innenraumseitigen Flächennormalen, was etwa der Bestrahlung durch übliche Projektoren entspricht. Die Angaben zum Reflexionsgrad beziehungsweise zum Reflexionsspektrum beziehen sich auf eine Reflexionsmessung mit einer Lichtquelle, die im betrachteten Spektralbereich gleichmäßig abstrahlt mit einer normierten Strahlungsintensität von 100%.

Um eine möglichst farbneutrale Darstellung des Projektorbildes zu erreichen, sollte das Reflexionsspektrum möglichst glatt sein und keine ausgeprägten lokalen Minima und Maxima ausweisen. Im Spektralbereich von 450 nm bis 650 nm sollte die Differenz zwischen dem maximal auftretenden Reflexionsgrad und dem Mittelwert des Reflexionsgrades sowie die Differenz zwischen dem minimal auftretenden Reflexionsgrad und dem Mittelwert des Reflexionsgrades in einer bevorzugten Ausgestaltung höchstens 1 % betragen, besonders bevorzugt höchstens 0,5 %, ganz besonders bevorzugt höchstens 0,2 %. Auch hier ist wieder der Reflexionsgrad gegenüber p-polarisierter Strahlung gemessen mit einem Einfallswinkel von 65° zur innenraumseitigen Flächennormalen heranzuziehen. Die abgegebene Differenz ist als absolute Abweichung des Reflexionsgrades (angegeben in %) zu verstehen, nicht als prozentuale Abweichung relativ zum Mittelwert.

Als Maß für die Glätte des Reflexionsspektrums kann alternativ die Standardabweichung im Spektralbereich von 450 nm bis 650 nm herangezogen werden. Sie beträgt bevorzugt kleiner 1%, besonders bevorzugt kleiner 0,5 %, ganz besonders bevorzugt kleiner 0,2 %.

Besonders vorteilhaft ist es, wenn die gemittelte Reflexionsgrad im gesamten sichtbaren Spektralbereich von 380 nm bis 780 nm mindestens 10% beträgt, bevorzugt mindestens 15%, und wenn die Differenz zwischen dem maximal auftretenden Reflexionsgrad und dem Mittelwert des Reflexionsgrades sowie die Differenz zwischen dem minimal auftretenden Reflexionsgrad und dem Mittelwert des Reflexionsgrades in diesem Spektralbereich höchstens 2 % betragen, bevorzugt höchstens 1,5 %. Die Standardabweichung im Spektralbereich von 380 nm bis 780 nm beträgt bevorzugt kleiner 1%, besonders bevorzugt kleiner 0,5 %. Durch ein möglichst glattes Reflexionsspektrum im sichtbaren Spektralbereich wird ein farbneutraler Gesamteindruck der Windschutzscheibe ohne Farbstich gewährleistet.

Die Reflexionsbeschichtung ist transparent, was im Sinne der Erfindung bedeutet, dass sie eine mittlere Transmission im sichtbaren Spektralbereich (380 nm bis 780 nm) von mindestens 70 %, bevorzugt mindestens 80 % aufweist und dadurch die Durchsicht durch die Scheibe nicht wesentlich einschränkt. Grundsätzlich ist es ausreichend, wenn der HUD-Bereich der Windschutzscheibe mit der Reflexionsbeschichtung versehen ist. Es können aber auch weitere Bereiche mit der Reflexionsbeschichtung versehen sein und die Windschutzscheibe kann im wesentlichen vollflächig mit der Reflexionsbeschichtung versehen sein, was herstellungsbedingt bevorzugt sein kann. In einer Ausgestaltung der Erfindung sind mindestens 80% der Scheibenoberfläche mit der erfindungsgemäßen Reflexionsbeschichtung versehen. Insbesondere ist die Reflexionsbeschichtung vollflächig auf die Scheibenoberfläche aufgebracht mit Ausnahme eines umlaufenden Randbereichs und optional lokaler Bereich, die als Kommunikations-, Sensor- oder Kamerafenster die Transmission von elektromagnetischer Strahlung durch die Windschutzscheibe gewährleisten sollen und daher nicht mit der Reflexionsbeschichtung versehen sind. Der umlaufende unbeschichtete Randbereich weist beispielsweise eine Breite von bis zu 20 cm auf. Er verhindert den direkten Kontakt der Reflexionsbeschichtung zur umgebenden Atmosphäre, so dass die Reflexionsbeschichtung im Innern der Windschutzscheibe vor Korrosion und Beschädigung geschützt ist. Die Reflexionsbeschichtung ist besonders bevorzugt auf der außenseitigen Oberfläche der Innenscheibe, weil die Projektorstrahlung dann den geringstmöglichen Weg durch die Windschutzscheibe zurücklegen muss, bis sie auf die Reflexionsbeschichtung trifft. Das ist vorteilhaft im Hinblick auf die Qualität des HUD-Bildes.

Die Reflexionsbeschichtung ist ein Dünnschichtstapel, also eine Schichtenfolge dünner Einzelschichten. Dieser Dünnschichtstapel enthält genau eine elektrisch leitfähige Schicht auf Basis von Silber. Die elektrisch leitfähige Schicht auf Basis von Silber verleiht der Reflexionsbeschichtung die grundlegenden reflektierenden Eigenschaften und außerdem eine IR-reflektierende Wirkung und eine elektrische Leitfähigkeit. Die Reflexionsbeschichtung enthält genau eine Silberschicht, also nicht mehr als eine Silberschicht, und auch oberhalb oder unterhalb der Reflexionsbeschichtung sind keine weiteren Silberschichten angeordnet. Es ist ein besonderer Vorteil der vorliegenden Erfindung, dass mit einer Silberschicht die gewünschten Reflexionseigenschaften erreicht werden können, ohne dass die Transmission zu stark herabgesetzt würde, wie es bei der Verwendung mehrerer leitfähiger Schichten der Fall wäre. Es können aber weitere elektrisch leitfähige Schichten vorliegen, die nicht wesentlich zur elektrischen Leitfähigkeit der Reflexionsbeschichtung beitragen, sondern einen anderen Zweck erfüllen. Dies gilt insbesondere für metallische Blockerschichten mit geometrischen Dicken von weniger als 1 nm, die bevorzugt zwischen der Silberschicht und den dielektrischen Schichtenfolgen angeordnet sind.

Die elektrisch leitfähige Schicht ist auf Basis von Silber (Ag) ausgebildet. Die leitfähige Schicht enthält bevorzugt mindestens 90 Gew. % Silber, besonders bevorzugt mindestens 99 Gew. % Silber, ganz besonders bevorzugt mindestens 99,9 Gew. % Silber. Die Silberschicht kann Dotierungen aufweisen, beispielsweise Palladium, Gold, Kupfer oder Aluminium. Die geometrische Schichtdicke der Silberschicht beträgt bevorzugt höchstens 15 nm, besonders bevorzugt höchstens 14 nm, ganz besonders bevorzugt höchstens 13 nm. Dadurch kann eine vorteilhafte Reflektivität im IR-Bereich, ohne die Transmission zu stark herabzusetzen. Die geometrische Schichtdicke der Silberschicht beträgt bevorzugt mindestens 5 nm, besonders bevorzugt mindestens 8 nm. Dünnere Silberschichten können zu einer Entnetzung des Schichtaufbaus führen. Besonders bevorzugt beträgt die geometrische Schichtdicke der Silberschicht von 10 nm bis 14 nm oder von 11 nm bis 13 nm.

Die Erfindung ist nicht auf eine bestimmte Ausgestaltung der Reflexionsbeschichtung beschränkt. Vielmehr kann die Reflexionsbeschichtung vom Fachmann den Erfordernissen im Einzelfall entsprechend frei gewählt werden, solange sie eine einzige Silberschicht aufweist. Typischerweise ist unterhalb der Silberschicht ist eine untere dielektrische Schicht oder Schichtenfolge angeordnet. Ebenso ist typischerweise oberhalb der Silberschicht eine obere dielektrische Schicht oder Schichtenfolge angeordnet. Die optischen Eigenschaften der Reflexionsbeschichtung, insbesondere die Transmission- und Reflexionsspektren, können vom Fachmann insbesondere durch den Schichtaufbau beeinflusst werden, also durch die Wahl der Materialien und Dicken der Einzelschichten sowie den Aufbau der dielektrischen Schichtenfolgen erreicht. Die Reflexionsbeschichtung kann so geeignet eingestellt werden. Nachstehend werden bevorzugte Ausgestaltungen der Reflexionsbeschichtung beschrieben, mit denen besonders gute Ergebnisse erzielt werden.

Brechungsindizes sind im Rahmen der vorliegenden Erfindung grundsätzlich bezogen auf eine Wellenlänge von 550 nm angegeben. Der Brechungsindex ist grundsätzlich unabhängig von der Messmethode, er kann beispielsweise mittels Ellipsometrie bestimmt werden. Ellipsometer sind kommerziell erhältlich, beispielsweise von der Firma Sentech. Die optische Dicke ist das Produkt aus der geometrischen Dicke und dem Brechungsindex (bei 550 nm). Die optische Dicke einer Schichtenfolge berechnet sich als Summe der optischen Dicken der Einzelschichten.

Ist eine erste Schicht oberhalb einer zweiten Schicht angeordnet, so bedeutet dies im Sinne der Erfindung, dass die erste Schicht weiter von dem Substrat, auf dem die Beschichtung aufgebracht ist, entfernt angeordnet ist als die zweite Schicht. Ist eine erste Schicht unterhalb einer zweiten Schicht angeordnet ist, so bedeutet dies im Sinne der Erfindung, dass die zweite Schicht weiter vom Substrat entfernt angeordnet ist als die erste Schicht.

Ist eine Schicht (Dünnschicht) einer Beschichtung auf Basis eines Materials ausgebildet, so besteht die Schicht mehrheitlich aus diesem Material, insbesondere im Wesentlichen aus diesem Material neben etwaigen Verunreinigungen oder Dotierungen.

In einer vorteilhaften Ausgestaltung weisen die obere und die untere dielektrische Schicht oder Schichtenfolge jeweils einen Brechungsindex auf, der mindestens 1,9 beträgt. Damit kann eine hohe Reflektivität gegenüber p-polarisierter Strahlung im Spektralbereich von 450 nm bis 650 nm erzielt werden, der für HUD-Darstellungen relevant ist (HUD-Projektoren arbeiten typischerweise mit den Wellenlängen 473 nm, 550 nm und 630 nm (RGB)). Dadurch wird ein intensitätsstarkes HUD-Bild erreicht. Bevorzugt beträgt das Verhältnis der optischen Dicke der oberen dielektrischen Schicht oder Schichtenfolge zur optischen Dicke der unteren dielektrischen Schicht oder Schichtenfolge mindestens 1,7. Es hat sich überraschend gezeigt, dass diese Asymmetrie der optischen Dicken zu einem deutlich glatteren Reflexionsspektrum gegenüber p-polarisierter Strahlung führt, so dass über den gesamten relevanten Spektralbereich (450 nm bis 650 nm) ein relativ konstanter Reflexionsgrad vorliegt. Dadurch wird eine farbneutrale Darstellung der HUD-Projektion gewährleistet. Das Verhältnis der optischen Dicken berechnet sich als Quotient aus der optischen Dicke der oberen dielektrischen Schicht oder Schichtenfolge (Divident) geteilt durch die optische Dicke der unteren dielektrischen Schicht oder Schichtenfolge (Divisor). In einer besonders bevorzugten Ausgestaltung beträgt das Verhältnis der optischen Dicke der oberen dielektrischen Schicht oder Schichtenfolge zur optischen Dicke der unteren dielektrischen Schicht oder Schichtenfolge mindestens 1,8, besonders bevorzugt mindestens 1,9. Damit werden besonders gute Ergebnisse erzielt.

In einer besonders vorteilhaften Ausgestaltung umfasst die Reflexionsbeschichtung keine dielektrischen Schichten, deren Brechungsindex weniger als 1,9 beträgt. Alle dielektrischen Schichten der Reflexionsbeschichtung weisen also einen Brechungsindex von mindestens 1,9 auf. Es ist ein besonderer Vorteil der vorliegenden Erfindung, dass die gewünschten Reflexionseigenschaften allein mit relativ hochbrechenden dielektrischen Schichten erreicht werden können. Da für niedrigbrechende Schichten mit einem Brechungsindex von kleiner als 1,9 insbesondere Siliziumoxid-Schichten in Frage kommen, die geringe Abscheidungsraten bei der magnetfeldunterstützten Kathodenabscheidung aufweisen, lässt sich die erfindungsgemäße Reflexionsbeschichtung so schnell und kostengünstig herstellen.

Die Reflexionsbeschichtung enthält typischerweise oberhalb und unterhalb der Silberschicht unabhängig voneinander jeweils eine dielektrische Schicht oder eine dielektrische Schichtenfolge mit einem Brechungsindex von mindestens 1,9. Die dielektrischen Schichten können beispielsweise auf Basis von Siliziumnitrid, Zinkoxid, Zinn-Zink-Oxid, Silizium-Metall-Mischnitriden wie Silizium-Zirkonium-Nitrid, Zirkoniumoxid, Nioboxid, Hafniumoxid, Tantaloxid, Wolframoxid oder Siliziumkarbid ausgebildet sein. Die genannten Oxide und Nitride können stöchiometrisch, unterstöchiometrisch oder überstöchiometrisch abgeschieden sein. Sie können Dotierungen aufweisen, beispielsweise Aluminium, Zirkonium, Titan oder Bor. Durch die Dotierungen können an sich dielektrische Materialien mit einer gewissen elektrischen Leitfähigkeit versehen werden. Der Fachmann wird sie hinsichtlich Ihrer Funktion dennoch als dielektrische Schichten identifizieren, wie es im Bereich der dünnen Schichten üblich ist. Das Material der dielektrischen Schichten weist bevorzugt eine elektrische Leitfähigkeit (Kehrwert des spezifischen Widerstands) von kleiner 10⁻⁴ S/m auf. Das Material der elektrisch leitfähigen Schichten weist bevorzugt eine elektrische Leitfähigkeit von größer 10⁴ S/m auf.

Die optische Dicke der oberen dielektrischen Schicht oder Schichtenfolge beträgt bevorzugt von 100 nm bis 200 nm, besonders bevorzugt von 130 nm bis 180 nm, ganz besonders bevorzugt von 160 nm bis 180 nm. Die optische Dicke der unteren dielektrischen Schicht oder Schichtenfolge beträgt bevorzugt von 50 nm bis 120 nm, besonders bevorzugt von 50 nm bis 100 nm oder von 80 nm bis 120 nm, ganz besonders bevorzugt von 80 nm bis 100 nm. Damit werden gute Ergebnisse erzielt.

In einer besonders vorteilhaften Ausgestaltung ist oberhalb und unterhalb der Silberschicht jeweils eine dielektrische Schicht angeordnet, die als Entspiegelungsschicht bezeichnet werden kann und bevorzugt auf Basis eines Oxids, beispielsweise Zinnoxid, und/oder eines Nitrids, beispielsweise Siliziumnitrid, ausgebildet ist, besonders bevorzugt auf Basis von Siliziumnitrid (Si₃N₄). Siliziumnitrid hat sich aufgrund seiner optischen Eigenschaften, seiner einfachen Verfügbarkeit sowie seiner hohen mechanischen und chemischen Stabilität bewährt. Das Silizium ist bevorzugt dotiert, beispielsweise mit Aluminium oder Bor. Im Falle von dielektrischen Schichtenfolgen ist die Schicht auf Basis von Siliziumnitrid bevorzugt die oberste Schicht der oberen Schichtenfolge beziehungsweise die unterste Schicht der unteren Schichtenfolge. Die geometrische Dicke der oberen Entspiegelungsschicht beträgt bevorzugt von 50 nm bis 100 nm, besonders bevorzugt von 55 nm bis 80 nm, insbesondere von 60 nm bis 70 nm. Die geometrische Dicke der unteren Entspiegelungsschicht beträgt bevorzugt von 10 nm bis 50 nm, besonders bevorzugt von 15 nm bis 40 nm, ganz besonders bevorzugt von 20 nm bis 35 nm, insbesondere von 20 nm bis 30 nm.

Neben der Entspiegelungsschicht können optional weitere dielektrische Schichten mit Brechungsindex von mindestens 1,9 vorhanden sein. So können die obere und untere Schichtenfolge unabhängig voneinander eine Anpassungsschicht enthalten, welche die Reflektivität der Silberschicht verbessern. Die Anpassungsschichten sind bevorzugt auf Basis von Zinkoxid (ZnO) ausgebildet, besonders bevorzugt Zinkoxid ZnO_{1-δ} mit 0 ≤ δ ≤ 0,01. Die Anpassungsschichten enthalten weiter bevorzugt Dotierungen. Die Anpassungsschichten können beispielsweise Aluminium-dotiertes Zinkoxid (ZnO:Al) enthalten. Das Zinkoxid wird bevorzugt unterstöchiometrisch bezüglich des Sauerstoffs abgeschieden um eine Reaktion von überschüssigem Sauerstoff mit der silberhaltigen Schicht zu vermeiden. Die Anpassungsschichten sind bevorzugt angeordnet zwischen der Silberschicht und der Entspiegelungsschicht. Die geometrische Dicke der Anpassungsschicht beträgt bevorzugt von 5 nm bis 30 nm, besonders bevorzugt von 8 nm bis 12 nm.

Es können auch brechungsindexsteigernde Schichten vorhanden sein, die einen höheren Brechungsindex aufweisen als die Entspiegelungsschicht, ebenfalls unabhängig voneinander in der oberen und der unteren Schichtenfolge. Dadurch können die optischen Eigenschaften weiter verbessert und feineingestellt werden, insbesondere die Reflexionseigenschaften. Die brechungsindexsteigernden Schichten enthalten bevorzugt ein Silizium-Metall-Mischnitrid wie Silizium-Zirkonium-Mischnitrid, Silizium-Aluminium-Mischnitrid, Silizium-Titan-Mischnitrid oder Silizium-Hafnium-Mischnitrid (SiHfN), besonders bevorzugt Silizium-Zirkonium-Mischnitrid (SiZrN). Der Anteil an Zirkonium beträgt dabei bevorzugt zwischen 15 und 45 Gew.-%, besonders bevorzugt zwischen 15 und 30 Gew.-%. Als alternative Materialien kommen beispielsweise WO₃, Nb₂O₅, Bi₂O₃, TiO₂ und/oder AIN in Betracht. Die brechungsindexsteigernden Schichten sind bevorzugt zwischen der Entspiegelungsschicht und der Silberschicht angeordnet beziehungsweise zwischen der Anpassungsschicht (soweit vorhanden) und der Entspiegelungsschicht. Die geometrische Dicke der brechungsindexsteigernden Schicht beträgt bevorzugt von 5 nm bis 30 nm, besonders bevorzugt von 5 nm bis 15 nm.

In einer Ausgestaltung der Reflexionsbeschichtung ist unterhalb der elektrisch leitfähigen Schicht genau eine untere dielektrische Schicht mit einem Brechungsindex von mindestens 1,9 angeordnet, bevorzugt auf Basis von Siliziumnitrid. Ebenso ist oberhalb der elektrisch leitfähigen Schicht genau eine obere dielektrische Schicht mit einem Brechungsindex von mindestens 1,9 angeordnet, bevorzugt auf Basis von Siliziumnitrid. Es ergibt sich die Schichtenfolge ausgehend vom Substrat: untere Entspiegelungsschicht - Silberschicht - obere Entspiegelungsschicht. Die Reflexionsbeschichtung enthält bevorzugt keine weiteren dielektrischen Schichten.

In einer weiteren Ausgestaltung der Reflexionsbeschichtung ist unterhalb der elektrisch leitfähigen Schicht eine erste untere dielektrische Schicht (Entspiegelungsschicht) und eine zweite untere dielektrische Schicht (Anpassungsschicht) angeordnet. Ebenso ist oberhalb der elektrisch leitfähigen Schicht eine erste obere dielektrische Schicht (Entspiegelungsschicht) und eine zweite obere dielektrische Schicht (Anpassungsschicht) angeordnet. Die Entspiegelungs- und Anpassungsschichten weisen einen Brechungsindex von mindestens 1,9 auf. Die Entspiegelungsschichten sind bevorzugt auf Basis von Siliziumnitrid ausgebildet, die Anpassungsschichten auf Basis von Zinkoxid. Die Anpassungsschichten sind bevorzugt zwischen der jeweiligen Entspiegelungsschicht und der Silberschicht angeordnet: Es ergibt sich die Schichtenfolge ausgehend vom Substrat: untere Entspiegelungsschicht - untere Anpassungsschicht - Silberschicht - obere Anpassungsschicht - obere Entspiegelungsschicht. Die Reflexionsbeschichtung enthält bevorzugt keine weiteren dielektrischen Schichten.

In einer weiteren Ausgestaltung der Reflexionsbeschichtung ist unterhalb der elektrisch leitfähigen Schicht eine erste untere dielektrische Schicht (Entspiegelungsschicht), eine zweite untere dielektrische Schicht (Anpassungsschicht) und eine dritte untere dielektrische Schicht (brechungsindexsteigernde Schicht) angeordnet. Ebenso ist oberhalb der elektrisch leitfähigen Schicht eine erste obere dielektrische Schicht (Entspiegelungsschicht), eine zweite obere dielektrische Schicht (Anpassungsschicht) und eine dritte obere dielektrische Schicht (brechungsindexsteigernde Schicht) angeordnet. Die Entspiegelungs- und Anpassungsschichten sowie die brechungsindexsteigernden Schichten weisen einen Brechungsindex von mindestens 1,9 auf. Die brechungsindexsteigernden Schichten weisen einen höheren Brechungsindex auf als die Entspiegelungsschichten, bevorzugt mindestens 2,1. Die Entspiegelungsschichten sind bevorzugt auf Basis von Siliziumnitrid ausgebildet, die Anpassungsschichten auf Basis von Zinkoxid, die brechungsindexsteigernden Schichten auf Basis eines Silizium-Metall-Mischnitrids, wie Silizium-Zirkonium-Mischnitrid oder Silizium-Hafnium-Mischnitrid. Die Anpassungsschichten weisen bevorzugt den geringsten Abstand zur Silberschicht auf, während die brechungsindexsteigernden Schichten zwischen den Anpassungsschichten und den Entspiegelungsschichten angeordnet sind. Es ergibt sich die Schichtenfolge ausgehend vom Substrat: untere Entspiegelungsschicht - untere brechungsindexsteigernde Schicht - untere Anpassungsschicht - Silberschicht - obere Anpassungsschicht - obere brechungsindexsteigernde Schicht - obere Entspiegelungsschicht. Die Reflexionsbeschichtung enthält bevorzugt keine weiteren dielektrischen Schichten.

Da die obere und die untere dielektrische Schichtenfolge unabhängig voneinander ausgebildet werden können, sind auch Kombinationen der vorstehend beschriebenen Ausgestaltungen möglich, wobei die obere dielektrische Schicht/Schichtenfolge gemäß einer Ausgestaltung ausgebildet ist und die untere dielektrische Schicht/Schichtenfolge gemäß einer anderen.

In einer vorteilhaften Ausgestaltung umfasst die Reflexionsbeschichtung mindestens eine metallische Blockerschicht. Die Blockerschicht kann unterhalb und/oder oberhalb der Silberschicht angeordnet sein und steht bevorzugt mit der Silberschicht in direktem Kontakt. Die Blockerschicht liegt dann zwischen Silberschicht und dielektrischer Schicht/Schichtenfolge. Die Blockerschicht dient dem Oxidationsschutz der Silberschicht insbesondere bei Temperaturbehandlungen der beschichteten Scheibe, wie sie typischerweise im Rahmen von Biegeprozessen vorkommen. Die Blockerschicht weist bevorzugt eine geometrische Dicke von weniger als 1 nm auf, beispielsweise 0,1 nm bis 0,5 nm. Die Blockerschicht ist bevorzugt auf Basis von Titan (Ti) oder einer Nickel-Chrom-Legierung (NiCr) ausgebildet. Besonders effektiv ist die Blockerschicht direkt oberhalb der Silberschicht, weswegen in einer bevorzugten Ausgestaltung die Reflexionsbeschichtung eine Blockerschicht oberhalb der Silberschicht und keine Blockerschicht unterhalb der Silberschicht aufweist. Die Silberschicht steht dann mit der unteren dielektrischen Schicht(enfolge) in direktem Kontakt und mit der oberen dielektrischen Schicht(enfolge) in indirektem Kontakt über die Blockerschicht. Die Blockerschicht ändert die optischen Eigenschaften der Reflexionsbeschichtung nur unwesentlich und ist bevorzugt bei allen vorstehend beschriebenen Ausgestaltungen vorhanden. Besonders bevorzugt ist die Blockerschicht dabei direkt oberhalb der Silberschicht angeordnet, also zwischen Silberschicht und oberer dielektrischer Schicht(enfolge), wo sie besonders effektiv ist.

In einer besonders vorteilhaften Ausgestaltung umfasst die Reflexionsbeschichtung die folgenden Einzelschichten, ausgehend von der Substratoberfläche, beziehungsweise besteht aus ihnen:
- eine untere Entspiegelungsschicht, bevorzugt auf Basis von Si₃N₄, bevorzugt mit einer geometrischen Dicke von 20 nm bis 30 nm,
- eine untere brechungsindexsteigernde Schicht, bevorzugt auf Basis von SiZrN oder SiHfN, bevorzugt mit einer geometrischen Dicke von 8 nm bis 12 nm,
- eine untere Anpassungsschicht, bevorzugt auf Basis von ZnO, bevorzugt mit einer geometrischen Dicke von 8 nm bis 12 nm,
- die Silberschicht, bevorzugt mit einer Dicke von 11 nm bis 13 nm,
- eine Blockerschicht, bevorzugt auf Basis von Ti oder NiCr, bevorzugt mit einer geometrischen Dicke von 0,1 nm bis 0,5 nm,
- eine obere Anpassungsschicht, bevorzugt auf Basis von ZnO, bevorzugt mit einer geometrischen Dicke von 8 nm bis 12 nm,
- eine obere brechungsindexsteigernde Schicht, bevorzugt auf Basis von SiZrN oder SiHfN, bevorzugt mit einer geometrischen Dicke von 8 nm bis 12 nm,
- eine obere Entspiegelungsschicht, bevorzugt auf Basis von Si₃N₄, bevorzugt mit einer geometrischen Dicke von 60 nm bis 70 nm.

Die erfindungsgemäße emissivitätsmindernde Beschichtung ist ebenfalls transparent, weißt also eine mittlere Transmission im sichtbaren Spektralbereich von mindestens 70 % auf, bevorzugt mindestens 80 %. Die emissivitätsmindernde Beschichtung ist typischerweise vollflächig auf der Substratoberfläche aufgebracht, eventuell mit Ausnahme eines umlaufenden Randbereichs und/oder anderer lokal begrenzter Bereich, die beispielsweise zur Datenübertragung dienen können. Der beschichtete Anteil der Substratoberfläche beträgt bevorzugt mindestens 80%.

Die emissivitätsmindernde Beschichtung weist erfindungsgemäß eine elektrisch leitfähige TCO-Schicht auf. Solche Schichten sind korrosionsbeständig und können auf exponierten Oberflächen eingesetzt werden. Der Brechungsindex der TCO-Schicht beträgt bevorzugt von 1,7 bis 2,3. Die elektrisch leitfähige Schicht ist bevorzugt auf Basis von Indium-Zinn-Oxid (ITO, *indium tin oxide*) ausgebildet, was sich besonders bewährt hat, insbesondere aufgrund eines geringen spezifischen Widerstands und einer geringen Streuung hinsichtlich des Flächenwiderstands. Die leitfähige Schicht kann alternativ aber auch beispielsweise auf Basis von Indium-Zink-Mischoxid (IZO), Gallium-dotiertes Zinnoxid (GZO), Fluor-dotiertes Zinnoxid (FTO, SnO₂:F), Antimon-dotiertes Zinnoxid (ATO, SnO₂:Sb) oder Niob-dotiertes Titanoxid (TiO₂:Nb) ausgebildet sein.

Die Dicke der TCO-Schicht beträgt bevorzugt von 50 nm bis 130 nm, besonders bevorzugt von 60 nm bis 100 nm, beispielsweise von 65 nm bis 80 nm. Damit werden besonders gute Ergebnisse hinsichtlich der elektrischen Leitfähigkeit erreicht bei gleichzeitiger hinreichender optischer Transparenz.

Auch hinsichtlich der emissivitätsmindernden Beschichtung ist die Erfindung nicht auf eine bestimmte Ausgestaltung beschränkt, solange sie eine TCO-Schicht aufweist. Typischerweise sind unterhalb und/oder oberhalb der TCO-Schicht eine dielektrische Schicht oder Schichtenfolge angeordnet, welche die optischen Eigenschaften, insbesondere die Transmission und Reflexivität, maßgeblich beeinflussen. Die emissivitätsmindernden Beschichtung ist dann ebenfalls ein Dünnschichtstapel, also eine Schichtenfolge dünner Einzelschichten. Nachstehend werden bevorzugte Ausgestaltungen der emissivitätsmindernden Beschichtung beschrieben, mit denen besonders gute Ergebnisse erzielt werden.

Einen besonderen Einfluss auf die optischen Eigenschaften haben sogenannte Entspiegelungsschichten oder Antireflexionsschichten, die einen geringeren Brechungsindex aufweisen als die TCO-Schicht und unterhalb wie oberhalb derselben angeordnet sind. Diese Entspiegelungsschichten können insbesondere infolge von Interferenzeffekten die Transmission durch die Scheibe erhöhen und die Reflexivität verringern. Die Wirkung hängt entscheidend von Brechungsindex und Schichtdicke ab.

In einer vorteilhaften Ausgestaltung umfasst die emissivitätsmindernde Beschichtung eine dielektrische untere Entspiegelungsschicht, die unterhalb der TCO-Schicht angeordnet ist. Der Brechungsindex der unteren Entspiegelungsschicht beträgt bevorzugt höchstens 1,8, beispielsweise von 1,3 bis 1,8, besonders bevorzugt höchstens 1,6, beispielsweise von 1,3 bis 1,6. Die Dicke der unteren Entspiegelungsschicht beträgt bevorzugt von 5 nm bis 50 nm, bevorzugt von 10 nm bis 30 nm, beispielsweise von 10 nm bis 20 nm.

In einer vorteilhaften Ausgestaltung umfasst die emissivitätsmindernde Beschichtung eine dielektrische obere Entspiegelungsschicht, die oberhalb der TCO-Schicht angeordnet ist. Der Brechungsindex der oberen Entspiegelungsschicht beträgt bevorzugt höchstens 1,8, beispielsweise von 1,3 bis 1,8, besonders bevorzugt höchstens 1,6, beispielsweise von 1,3 bis 1,6. Die Dicke der oberen Entspiegelungsschicht beträgt bevorzugt von 10 nm bis 100 nm, besonders bevorzugt von 30 nm bis 70 nm, beispielsweise von 45 nm bis 55 nm.

In einer besonders vorteilhaften Ausgestaltung weist die emissivitätsmindernde Beschichtung sowohl eine untere Entspiegelungsschicht unterhalb der TCO-Schicht als auch eine obere Entspiegelungsschicht oberhalb der TCO-Schicht auf.

Die Entspiegelungsschichten bewirken insbesondere vorteilhafte optische Eigenschaften der Scheibe. So erhöhen die Transparenz der Windschutzscheibe und fördern einen neutralen Farbeindruck. Die Entspiegelungsschichten sind bevorzugt auf Basis eines Oxids oder Fluorids ausgebildet, besonders bevorzugt auf Basis von Siliziumoxid, Magnesiumfluorid oder Kalziumfluorid, insbesondere auf Basis von Siliziumoxid (SiO₂). Das Siliziumoxid kann Dotierungen aufweisen und ist bevorzugt mit Aluminium (SiO₂:Al), mit Bor (SiO₂:B), mit Titan (SiO₂:Ti) oder mit Zirkonium dotiert (SiO₂:Zr).

Die obere Entspiegelungsschicht kann die oberste Schicht der Beschichtung sein. Sie weist dann den größten Abstand zur Substratoberfläche (innenraumseitige Oberfläche der Innenscheibe) auf und ist die abschließende Schicht des Schichtstapels, die freiliegend, exponiert sowie für Personen zugänglich und berührbar ist. Es ist aber auch möglich, dass oberhalb der oberen Entspiegelungsschicht eine oder mehrere weitere Einzelschichten angeordnet sind. Eine solche weitere Schicht kann beispielsweise zur Verbesserung des Kratzschutzes dienen und auf Basis von Zirkoniumoxid, Titanoxid oder Hafniumoxid ausgebildet sein.

Es hat sich gezeigt, dass der Sauerstoffgehalt der TCO-Schicht einen wesentlichen Einfluss auf deren Eigenschaften hat, insbesondere auf die Transparenz und Leitfähigkeit. Die Herstellung der Scheibe umfasst typischerweise eine Temperaturbehandlung, beispielsweise einen thermischen Vorspannprozess und/oder Biegeprozess, wobei Sauerstoff zur TCO-Schicht diffundieren und diese oxidieren kann. In einer vorteilhaften Ausgestaltung umfasst die emissivitätsmindernde Beschichtung zwischen der TCO-Schicht und der oberen Entspiegelungsschicht eine dielektrische Barriereschicht zur Regulierung von Sauerstoffdiffusion mit einem Brechungsindex von mindestens 1,9. Die Barriereschicht dient dazu, die Sauerstoffzufuhr auf ein optimales Maß einzustellen. Besonders gute Ergebnisse werden erzielt, wenn der Brechungsindex der Barriereschicht von 1,9 bis 2,5 beträgt.

Die dielektrische Barriereschicht zur Regulierung von Sauerstoffdiffusion ist bevorzugt auf Basis eines Nitrids oder eines Carbids ausgebildet. Die Barriereschicht kann beispielsweise auf Basis eines Nitrids oder Carbids von Wolfram, Niob, Tantal, Zirkonium, Hafnium, Chrom, Titan, Silizium oder Aluminium ausgebildet sein. In einer bevorzugten Ausgestaltung ist die Barriereschicht auf Basis von Siliziumnitrid oder Siliziumcarbid ausgebildet, insbesondere Siliziumnitrid (Si₃N₄), womit besonders gute Ergebnisse erzielt werden. Das Siliziumnitrid kann Dotierungen aufweisen und ist in einer bevorzugten Weiterbildung mit Aluminium (Si₃N₄:Al), mit Zirkonium (Si₃N₄:Zr), mit Titan (Si₃N₄:Ti), oder mit Bor dotiert (Si₃N₄: B). Bei einer Temperaturbehandlung nach dem Aufbringen der erfindungsgemäßen Beschichtung kann das Siliziumnitrid teilweise oxidiert werden. Eine als Si₃N₄ abgeschiedene Barriereschicht enthält dann nach der Temperaturbehandlung SiₓN_{y}O_{z}, wobei der Sauerstoffgehalt typischerweise von 0 Atom-% bis 35 Atom-% beträgt.

Die Dicke der Barriereschicht beträgt bevorzugt von 5 nm bis 20 nm, besonders bevorzugt von 7 nm bis 15 nm, ganz besonders bevorzugt von 7 nm bis 12 nm, beispielsweise von 8 nm bis 12 nm oder von 8 nm bis 10 nm. Damit wird der Sauerstoffgehalt der TCO-Schicht besonders vorteilhaft reguliert. Die Dicke der Barriereschicht wird hinsichtlich der Sauerstoffdiffusion gewählt, weniger hinsichtlich der optischen Eigenschaften der Scheibe. Es hat sich jedoch gezeigt, dass Barriereschichten mit Dicken im angegebenen Bereich mit der erfindungsgemäßen emissivitätsmindernden Beschichtung und deren optischen Anforderungen kompatibel sind.

In einer vorteilhaften Ausgestaltung umfasst die emissivitätsmindernde Beschichtung unterhalb der TCO-Schicht, und gegebenenfalls unterhalb der unteren Entspiegelungsschicht, eine dielektrische Blockerschicht gegen Alkalidiffusion. Durch die Blockerschicht wird die Diffusion von Alkali-Ionen aus dem Glassubstrat in das Schichtsystem reduziert oder unterbunden. Alkali-Ionen können die Eigenschaften der Beschichtung negativ beeinflussen. Weiterhin trägt die Blockerschicht im Zusammenspiel mit der unteren Entspiegelungsschicht zur Einstellung der Optik des Gesamtschichtaufbaus vorteilhaft bei. Der Brechungsindex der Blockerschicht beträgt bevorzugt mindestens 1,9. Besonders gute Ergebnisse werden erzielt, wenn der Brechungsindex der Blockerschicht von 1,9 bis 2,5 beträgt. Die Blockerschicht ist bevorzugt auf Basis eines Oxids, eines Nitrids oder eines Carbids ausgebildet, bevorzugt von Wolfram, Chrom, Niob, Tantal, Zirkonium, Hafnium, Titan, Silizium oder Aluminium, beispielsweise Oxide wie WO₃, Nb₂O₅, Bi₂O₃, TiO₂, Ta₂O₅, Y₂O₃, ZrO₂, HfO₂ SnO₂, oder ZnSnOₓ, oder Nitride wie AIN. Die Blockerschicht ist besonders bevorzugt aus Basis von Siliziumnitrid (Si₃N₄) ausgebildet, womit besonders gute Ergebnisse erzielt werden. Das Siliziumnitrid kann Dotierungen aufweisen und ist in einer bevorzugten Weiterbildung mit Aluminium (Si₃N₄:Al), mit Titan (Si₃N₄:Ti), mit Zirkonium (Si₃N₄:Zr) oder mit Bor dotiert (Si₃N₄:B). Die Dicke der Blockerschicht beträgt bevorzugt von 10 nm bis 50 nm, besonders bevorzugt von von 20 nm bis 40 nm, beispielsweise von 25 nm bis 35 nm. Die Blockerschicht ist bevorzugt die unterste Schicht des Schichtstapels, hat also direkten Kontakt zur Substratoberfläche, wo sie ihre Wirkung optimal entfalten kann.

In einer besonders bevorzugten Ausgestaltung besteht die Beschichtung nur aus den beschriebenen Schichten und enthält keine weiteren Schichten. Die emissivitätsmindernde Beschichtung besteht dann aus folgenden Schichten in der angegebenen Reichenfolge ausgehend von der Substratoberfläche (innenraumseitige Oberfläche der Innenscheibe):
- Blockerschicht gegen Alkalidiffusion
- untere Entspiegelungsschicht
- elektrisch leitfähige TCO-Schicht
- Barriereschicht zur Regulierung von Sauerstoffdiffusion
- obere Entspiegelungsschicht

In einer Ausgestaltung der Erfindung weist die Windschutzscheibe einen Bereich auf, in dem die thermoplastische Zwischenschicht getönt oder gefärbt ist. Dies tritt insbesondere bei sogenannten Panorama-Windschutzscheiben auf, welche in Richtung der Oberkante im Vergleich zu herkömmlichen Windschutzscheiben verlängert sind, dort eine starke Krümmung aufweisen und sich gleichsam in den Dachbereich des Fahrzeugs hineinziehen. Durch eine solche Panorama-Windschutzscheibe wird den Fahrzeuginsassen ein Gefühl der "Offenheit" vermittelt. In diesem Fall ist der Bereich mit der getönten Zwischenschicht oberhalb des zentralen Sichtfeldes angeordnet, also zwischen dem zentralen Sichtfeld und der Oberkante der Windschutzscheibe, insbesondere zur Oberkante oder einen an die Oberkante grenzenden opaken Abdeckdruck. Mit zentralem Sichtfeld ist hier das Sichtfeld B gemäß der Regelung Nr. 43 der Wirtschaftskommission der Vereinten Nationen für Europa (UN/ECE) (ECE-R43, "Einheitliche Bedingungen für die Genehmigung der Sicherheitsverglasungswerkstoffe und ihres Einbaus in Fahrzeuge") gemeint. Dort ist das Sichtfeld B in Anhang 18 definiert. Die Zwischenschicht kann in dem besagten Bereich einen Tönungsverlauf aufweisen, wobei beispielsweise der Grad der Tönung von unten in Richtung Oberkante stärker wird und die Lichttransmission durch die Windschutzscheibe dadurch geringer. In dem besagten getönten Bereich beträgt die Lichttransmission (Gesamttransmission nach ECE-R 43) bevorzugt zumindest abschnittsweise weniger als 70%, besonders bevorzugt weniger als 50%, ganz besonders bevorzugt weniger als 30% und insbesondere weniger als 10%. Der getönte Bereich der Zwischenschicht beispielsweise erzeugt werden, in dem statt einer klaren Polymerfolie ein Abschnitt einer getönten Polymerfolie eingesetzt wird. Es kann alternativ auch eine getönte Folie auf die klare PVB-Folie aufgelegt werden.

Der getönte Bereich weist eine verstärkte Absorption der Sonnenstrahlung auf und wird daher stärker erwärmt. Dies kann zu einer Aufheizung des Fahrzeuginnenraums infolge der Aussendung von Wärmestrahlung führen. Durch die erfindungsgemäße emissivitätsmindernde Beschichtung wird dieser Effekt reduziert und der thermische Komfort verbessert. Die Vorteile der Erfindung sind daher bei einer solche Scheibe besonders ausgeprägt.

Der Projektor ist innenraumseitig der Windschutzscheibe angeordnet und bestrahlt die Windschutzscheibe über die innenraumseitige Oberfläche der Innenscheibe. Er ist auf den HUD-Bereich gerichtet und bestrahlt diesen zur Erzeugung der HUD-Projektion. Die Strahlung des Projektors ist zumindest teilweise p-polarisiert, weist also p-polarisierte Strahlungsanteile auf. Die Strahlung des Projektors ist bevorzugt überwiegend p-polarisiert, weißt also einen p-polarisierten Strahlungsanteil von größer als 50% auf. Je höher der Anteil der p-polarisierten Strahlung an der Gesamtstrahlung des Projektors ist, desto intensitätsstärker ist das gewünschte Projektionsbild und desto intensitätsschwächer sind unerwünschte Reflexionen an den Oberflächen der Windschutzscheibe. Der p-polarisierte Strahlungsanteil des Projektors beträgt bevorzugt mindestens 70%, besonders bevorzugt mindestens 80% und insbesondere mindestens 90%. In einer besonders vorteilhaften Ausgestaltung ist die Strahlung des Projektors im Wesentlichen rein p-polarisiert ist - der p-polarisierte Strahlungsanteil beträgt also 100% oder weicht nur unwesentlich davon ab. Die Angabe der Polarisationsrichtung bezieht sich dabei auf die Einfallsebene der Strahlung auf der Windschutzscheibe. Mit p-polarisierter Strahlung wird eine Strahlung bezeichnet, deren elektrisches Feld in der Einfallsebene schwingt. Mit s-polarisierter Strahlung wird eine Strahlung bezeichnet, deren elektrisches Feld senkrecht zur Einfallsebene schwingt. Die Einfallsebene wird durch den Einfallsvektor und die Flächennormale der Windschutzscheibe im geometrischen Zentrum des bestrahlten Bereichs aufgespannt.

Die Polarisation, also insbesondere der Anteil an p- und s-polarisierter Strahlung, wird an einem Punkt des HUD-Bereichs bestimmt, bevorzugt im geometrischen Zentrum des HUD-Bereichs. Da Windschutzscheiben üblicherweise gekrümmt sind, was Auswirkungen auf die Einfallsebene der Projektorstrahlung hat, können in den übrigen Bereichen leicht davon abweichende Polarisationsanteile auftreten, was aus physikalischen Gründen unvermeidlich ist.

Die Strahlung des Projektors trifft bevorzugt mit einem Einfallswinkel von 45° bis 70°, insbesondere von 60° bis 70° auf die Windschutzscheibe. In einer vorteilhaften Ausgestaltung weicht der Einfallswinkel um höchstens 10° vom Brewsterwinkel ab. Die p-polarisierte Strahlung wird dann nur unwesentlich an den Oberflächen der Windschutzscheibe reflektiert, so dass kein Geisterbild erzeugt wird. Der Einfallswinkel ist der Winkel zwischen dem Einfallsvektor der Projektorstrahlung und der innenraumseitigen Flächennormale (also die Flächennormale auf die innenraumseitige externe Oberfläche der Windschutzscheibe) im geometrischen Zentrum des HUD-Bereichs. Der Brewsterwinkel für einen Luft-Glas-Übergang im Falle von Kalk-Natron-Glas, das für Fensterscheiben allgemein üblich ist, beträgt 56,5°. Idealerweise sollte der Einfallswinkel diesem Brewster-Winkel möglichst nahekommen. Es können aber beispielsweise auch Einfallswinkel von 65° verwendet werden, die für HUD-Projektionsanordnungen üblich sind, in Fahrzeugen problemlos zu realisieren sind und nur in einem geringen Maße vom Brewsterwinkel abweichen, so dass die Reflexion der p-polarisierten Strahlung nur unwesentlich zunimmt.

Da die Reflexion der Projektorstrahlung im Wesentlichen an der Reflexionsbeschichtung erfolgt und nicht an den externen Scheibenoberflächen, ist es nicht nötig, die externen Scheibenoberflächen in einem Winkel zueinander anzuordnen, um Geisterbilder zu vermeiden. Die externen Oberflächen der Windschutzscheibe sind daher bevorzugt im Wesentlichen parallel zueinander angeordnet. Die thermoplastische Zwischenschicht ist dazu bevorzugt nicht keilartig ausgebildet, sondern weist eine im Wesentlichen konstante Dicke auf, insbesondere auch im vertikalen Verlauf zwischen der Oberkante und der Unterkante der Windschutzscheibe, ebenso wie die Innenscheibe und die Außenscheibe. Eine keilartige Zwischenschicht würde dagegen im vertikalen Verlauf zwischen Unterkante und Oberkante der Windschutzscheibe eine veränderliche, insbesondere zunehmende Dicke aufweisen. Die Zwischenschicht ist typischerweise aus mindestens einer thermoplastischen Folie ausgebildet. Da Standardfolien deutlich kostengünstiger sind als Keilfolien, wird die Herstellung der Windschutzscheibe günstiger gestaltet.

Die Außenscheibe und die Innenscheibe sind bevorzugt aus Glas gefertigt, insbesondere aus Kalk-Natron-Glas, was für Fensterscheiben üblich ist. Die Scheiben können grundsätzlich aber auch aus anderen Glasarten (beispielsweise Borosilikatglas, Quarzglas, Aluminosilikatglas) oder transparenten Kunststoffen (beispielsweise Polymethylmethacrylat oder Polycarbonat) gefertigt sein. Die Dicke der Außenscheibe und der Innenscheibe kann breit variieren. Vorzugsweise werden Scheiben mit einer Dicke im Bereich von 0,8 mm bis 5 mm, bevorzugt von 1,4 mm bis 2,5 mm verwendet, beispielsweise die mit den Standarddicken 1,6 mm oder 2,1 mm.

Die Außenscheibe, die Innenscheibe und die thermoplastische Zwischenschicht können klar und farblos, aber auch getönt oder gefärbt sein. Die Gesamttransmission durch Windschutzscheibe (samt Reflexionsbeschichtung) beträgt in einer bevorzugten Ausgestaltung größer 70%. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die Außenscheibe und die Innenscheiben können unabhängig voneinander nicht vorgespannt, teilvorgespannt oder vorgespannt sein. Soll mindestens eine der Scheiben eine Vorspannung aufweisen, so kann dies eine thermische oder chemische Vorspannung sein.

In einer vorteilhaften Ausgestaltung ist die Außenscheibe getönt oder gefärbt. Dadurch kann die außenseitige Reflekivität der Windschutzscheibe verringert werden, wodurch der Eindruck der Scheibe angenehmer gestaltet wird für einen äußeren Betrachter. Um allerdings die vorgeschriebene Lichttransmission von 70% für Windschutzscheiben zu gewährleisten (Gesamttransmission), sollte die Außenscheibe bevorzugt eine Lichttransmission von mindestens 80% aufweisen, besonders bevorzugt von mindestens 85%. Die Innenscheibe und die Zwischenschicht sind bevorzugt klar, also nicht getönt oder gefärbt. Beispielsweise kann grün oder blau gefärbtes Glas als Außenscheibe eingesetzt werden. Die Lichttransmission beschreibt den Anteil durch die Scheibe hindurchtretender Strahlung an der auf die Scheibe auftreffende Strahlung im sichtbaren Spektralbereich, bei einem Einstrahlwinkel von 0° zur Flächennormalen. Sie kann beispielsweise mit dem Spektrometer "Lambda 900" der Firma Perkin Elmer bestimmt werden.

Die Windschutzscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Die Windschutzscheibe kann aber auch plan sein, beispielsweise wenn es als Scheibe für Busse, Züge oder Traktoren vorgesehen ist.

Die thermoplastische Zwischenschicht enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt PVB. Die Zwischenschicht ist typischerweise aus einer thermoplastischen Folie ausgebildet, insbesondere auf Basis von PVB, EVA oder PU. Damit ist gemeint, dass die Folie größtenteils aus dem besagten Polymer besteht (Anteil größer als 50 Gew.-%). Die Folie kann außer dem Polymer weitere Zusätze enthalten, insbesondere Weichmacher. Die Dicke der Zwischenschicht beträgt bevorzugt von 0,2 mm bis 2 mm, besonders bevorzugt von 0,3 mm bis 1 mm.

Die Windschutzscheibe wird kann hergestellt werden durch an sich bekannte Verfahren. Die Außenscheibe und die Innenscheibe werden über die Zwischenschicht miteinander laminiert, beispielsweise durch Autoklavverfahren, Vakuumsackverfahren, Vakuumringverfahren, Kalanderverfahren, Vakuumlaminatoren oder Kombinationen davon. Die Verbindung von Außenscheibe und Innenscheibe erfolgt dabei üblicherweise unter Einwirkung von Hitze, Vakuum und/oder Druck.

Die Reflexionsbeschichtung und die emissivitätsmindernde Beschichtung werden bevorzugt durch physikalische Gasphasenabscheidung (PVD) auf die jeweilige Scheibenoberfläche aufgebracht, besonders bevorzugt durch Kathodenzerstäubung ("Sputtern"), ganz besonders bevorzugt durch magnetfeldunterstütze Kathodenzerstäubung ("Magnetronsputtern"). Grundsätzlich können die Beschichtungen aber auch beispielsweise mittels chemischer Gasphasenabscheidung (CVD), beispielsweise plasmagestützte Gasphasenabscheidung (PECVD), durch Aufdampfen oder durch Atomlagenabscheidung (*atomic layer deposition,* ALD) aufgebracht werden. Die Beschichtungen werden bevorzugt vor der Lamination aufgebracht. Statt die Reflexionsbeschichtung auf eine Scheibenoberfläche aufzubringen, kann sie grundsätzlich auch auf einer Trägerfolie bereitgestellt werden, die in der Zwischenschicht angeordnet wird.

Soll die Windschutzscheibe gebogen sein, so werden die Außenscheibe und die Innenscheibe bevorzugt vor der Lamination und bevorzugt nach etwaiger Beschichtungsprozesse einem Biegeprozess unterzogen. Bevorzugt werden die Außenscheibe und die Innenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500°C bis 700°C. Diese Temperaturbehandlung erhöht auch die Transparenz und verringert den Flächenwiderstand der Reflexionsbeschichtung.

Die Erfindung umfasst weiter die Verwendung einer erfindungsgemäßen Projektionsanordnung als HUD in einem Kraftfahrzeug, insbesondere einem Personenkraftwagen oder Lastkraftwagen.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf eine Verbundscheibe einer gattungsgemäßen Projektionsanordnung,
- Fig. 2: einen Querschnitt durch eine gattungsgemäße Projektionsanordnung,
- Fig. 3: einen Querschnitt durch eine Verbundscheibe einer erfindungsgemäßen Projektionsanordnung,
- Fig. 4: einen Querschnitt durch eine Ausgestaltung der erfindungsgemäßen Reflexionsbeschichtung und emissivitätsmindernden Beschichtung auf einer Innenscheibe,
- Fig. 5: Reflexionsspektren von Verbundscheiben gegenüber p-polarisierter Strahlung gemäß dem Beispiel und den Vergleichsbeispielen 1 und 2.

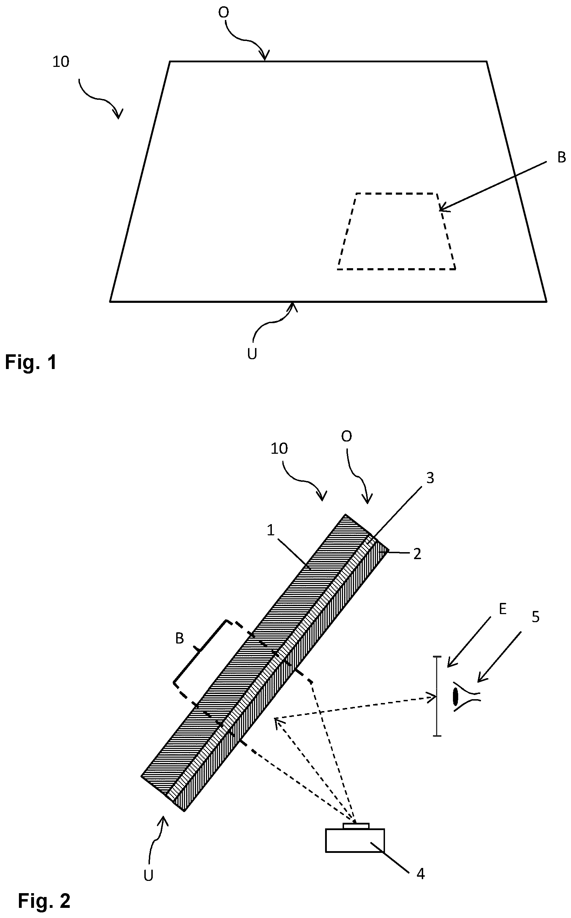

Figur 1 und Figur 2 zeigen je ein Detail einer gattungsgemäßen Projektionsanordnung für ein HUD. Die Projektionsanordnung umfasst eine Windschutzscheibe 10, insbesondere die Windschutzscheibe eines Personenkraftwagens. Die Projektionsanordnung umfasst außerdem einen Projektor 4, welcher auf einen Bereich der Verbundscheibe 10 gerichtet ist. In diesem Bereich, der üblicherweise als HUD-Bereich B bezeichnet wird, können durch den Projektor 4 Bilder erzeugt werden, welche von einem Betrachter 5 (Fahrzeugfahrer) als virtuelle Bilder auf der von ihm abgewandten Seite der Verbundscheibe 10 wahrgenommen werden, wenn sich seine Augen innerhalb der sogenannten Eyebox E befinden.

Die Windschutzscheibe 10 ist aufgebaut aus einer Außenscheibe 1 und einer Innenscheibe 2, die über eine thermoplastische Zwischenschicht 3 miteinander verbunden sind. Ihre Unterkante U ist nach unten in Richtung des Motors des Personenkraftwagens angeordnet, ihre Oberkante O nach oben in Richtung des Dachs. Die Außenscheibe 1 ist in Einbaulage der äußeren Umgebung zugewandt, die Innenscheibe 2 dem Fahrzeuginnenraum.

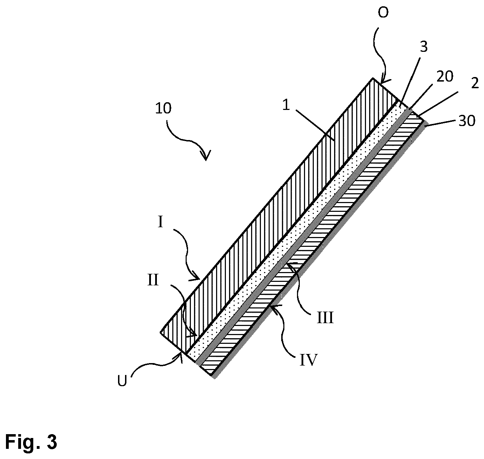

Figur 3 zeigt eine Ausgestaltung einer erfindungsgemäß ausgebildeten Windschutzscheibe 10. Die Außenscheibe 1 weist eine außenseitige Oberfläche I auf, die in Einbaulage der äußeren Umgebung zugewandt ist, und eine innenraumseitige Oberfläche II, die in Einbaulage dem Innenraum zugewandt ist. Ebenso weist die Innenscheibe 2 eine außenseitige Oberfläche III auf, die in Einbaulage der äußeren Umgebung zugewandt ist, und eine innenraumseitige Oberfläche IV, die in Einbaulage dem Innenraum zugewandt ist. Die Außenscheibe 1 und die Innenscheibe 2 bestehen beispielsweise aus Kalk-Natron-Glas und weisen eine Dicke von 2,1 mm auf. Die Zwischenschicht 3 ist beispielsweise aus einer PVB-Folie ausgebildet mit einer Dicke von 0,76 mm. Die PVB-Folie weist eine im Wesentlichen konstante Dicke auf, abgesehen von einer etwaigen fachüblichen Oberflächenrauigkeit - sie ist nicht als sogenannte Keilfolie ausgebildet.

Die außenseitige Oberfläche III der Innenscheibe 2 ist mit einer erfindungsgemäßen Reflexionsbeschichtung 20 versehen, die als Reflexionsfläche für die Projektorstrahlung (und eventuell zusätzlich als IR-reflektierende Beschichtung) vorgesehen ist.

Der Strahlung des Projektors 4 ist erfindungsgemäß p-polarisiert, insbesondere im Wesentlichen rein p-polarisiert. Da der Projektor 4 die Windschutzscheibe 10 mit einem Einfallswinkel von etwa 65° bestrahlt, der nahe dem Brewster-Winkel liegt, wird die Strahlung des Projektors nur unwesentlich an den externen Oberflächen I, IV der Verbundscheibe 10 reflektiert. Die erfindungsgemäße Reflexionsbeschichtung 20 dagegen ist auf die Reflexion p-polarisierter Strahlung optimiert. Sie dient als Reflexionsfläche für die Strahlung des Projektors 4 zur Erzeugung der HUD-Projektion.

Die innenraumseitige Oberfläche IV der Innenscheibe 2 ist mit einer erfindungsgemäßen emissivitätsmindernden Beschichtung 30 versehen. Solche emissivitätsmindernden Beschichtungen 30 erhöhen den thermischen Komfort im Innenraum des Fahrzeugs durch Reflexion von Wärmestrahlung. Überraschenderweise führt die Anwesenheit der emissivitätsmindernden Beschichtung 30 auch zu einer Verbesserung der Reflexionseigenschaften gegenüber der p-polarisierten Strahlung des Projektors 4, so dass eine verbesserte Darstellung der HUD-Abbildung erreicht wird.

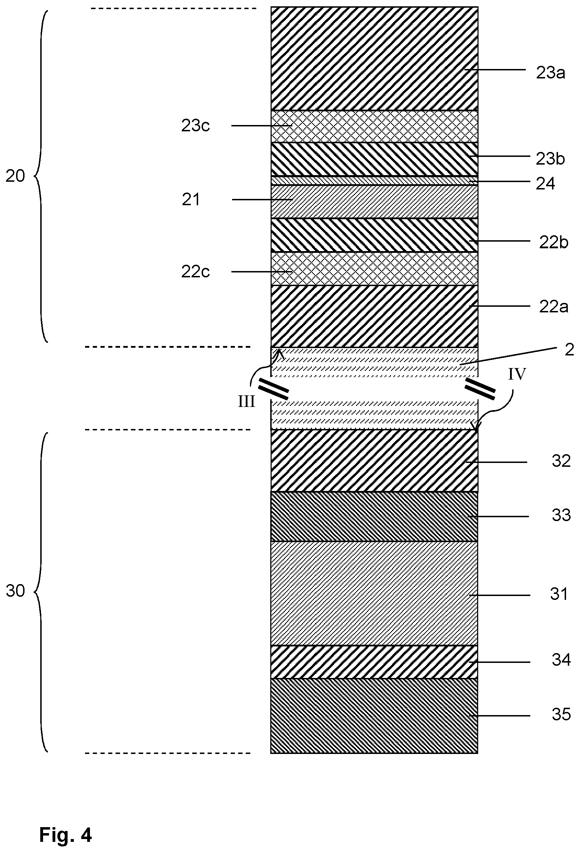

Figur 4 zeigt die Schichtenfolge von Ausgestaltungen der erfindungsgemäßen Reflexionsbeschichtung 20 und der erfindungsgemäßen emissivitätsmindernden Beschichtung 30. Die Reflexionsbeschichtung 20 und die emissivitätsmindernde Beschichtung 30 sind Stapel von Dünnschichten. Die Reflexionsbeschichtung 20 umfasst eine elektrisch leitfähige Schicht 21 auf Basis von Silber. Direkt oberhalb der elektrisch leitfähigen Schicht 21 ist eine metallische Blockerschicht 24 angeordnet. Darüber ist eine obere dielektrische Schichtenfolge angeordnet, die von unten nach oben aus einer oberen Anpassungsschicht 23b, einer oberen brechungsindexsteigernden Schicht 23c und einer oberen Entspiegelungsschicht 23a. Unterhalb der elektrisch leitfähigen Schicht 21 ist eine untere dielektrische Schichtenfolge angeordnet, die von oben nach unten aus einer unteren Anpassungsschicht 22b, einer unteren brechungsindexsteigernden Schicht 22c und einer unteren Entspiegelungsschicht 22a.

Der dargestellte Schichtaufbau ist lediglich beispielhaft zu verstehen. So können die dielektrischen Schichtenfolgen auch mehr oder weniger Schichten umfassen. Die dielektrischen Schichtenfolgen müssen auch nicht symmetrisch sein. Beispielhafte Materialien und Schichtdicken können dem nachfolgenden Beispiel entnommen werden.

Die emissivitätsmindernde Beschichtung 30 umfasst eine elektrisch leitfähige Schicht 31 auf Basis von Indium-Zinn-Oxid (ITO). Unterhalb der elektrisch leitfähigen Schicht 31 ist zunächst eine Blockerschicht 32 gegen Alkalidiffusion und darüber eine untere Entspiegelungsschicht 33 angeordnet. Oberhalb der elektrisch leitfähigen Schicht 31 ist zunächst eine Barriereschicht 34 zur Regulierung von Sauerstoffdiffusion und eine obere Entspiegelungsschicht 35 angeordnet. Der dargestellte Schichtaufbau ist wiederum lediglich beispielhaft zu verstehen. Beispielhafte Materialien und Schichtdicken können dem nachfolgenden Beispiel entnommen werden.

Die Schichtenfolgen einer Windschutzscheibe 10 mit der Reflexionsbeschichtung 20 auf der außenseitigen Oberfläche III der Innenscheibe 2 und der emissivitätsmindernden Beschichtung 30 auf der innenraumseitigen Oberfläche IV der Innenscheibe 2 gemäß einem erfindungsgemäßen Beispiel, zusammen mit den Materialien und geometrische Schichtdicken der Einzelschichten, in Tabelle 1 dargestellt. Die dielektrischen Schichten können unabhängig voneinander dotiert sein, beispielsweise mit Bor oder Aluminium. Die Materialien müssen auch nicht stöchiometrisch abgeschieden sein, sondern können von der Stöchiometrie der angegebenen Summenformeln abweichen. Zum Vergleich sind auch zwei Vergleichsbeispiele in Tabelle 1 dargestellt. In Vergleichsbeispiel 1 weist die Windschutzscheibe 10 nur die Reflexionsbeschichtung 20 auf, in Vergleichsbeispiel 2 nur die emissivitätsmindernde Beschichtung 30.

**Tabelle 1**

| Material | Bezugszeichen | | Schichtdicke | | |
|---|---|---|---|---|---|
| | | | Beispiel | Vergleichsbeispiel 1 | Vergleichsbeispiel 2 |
| Kalk-Natron-Glas | 1 | | 2,1 mm | 2,1 mm | 2,1 mm |
| PVB | 3 | | 0,76 mm | 0,76 mm | 0,76 mm |
| Si₃N₄ | 20 | 23a | 65 nm | 65 nm | - |
| SiZrN | | 23c | 10 nm | 10 nm | - |
| ZnO | | 23b | 10 nm | 10 nm | - |
| NiCr | | 24 | 0,3 nm | 0,3 nm | - |
| **Ag** | | **21** | **11 nm** | **11 nm** | - |
| ZnO | | 22b | 10 nm | 10 nm | - |
| SiZrN | | 22c | 10 nm | 10 nm | - |
| Si₃N₄ | | 22a | 25 nm | 25 nm | - |
| Kalk-Natron-Glas | 2 | | 2,1 mm | 2,1 mm | 2,1 mm |
| Si₃N₄ | 30 | 32 | 30 nm | | 30 nm |
| SiO₂ | | 33 | 20 nm | | 20 nm |
| **ITO** | | 31 | **70 nm** | | **70 nm** |
| Si₃N₄ | | 34 | 9 nm | | 9 nm |
| SiO₂ | | 35 | 50 nm | | 50 nm |

Die optischen Dicken der dielektrischen Schichtenfolgen können als Produkt der angegebenen geometrischen Dicken und des Brechungsindex (Si₃N₄: 2,0; SiZrN: 2,2, ZnO: 2,0; SiO₂: 1,5) berechnet werden.

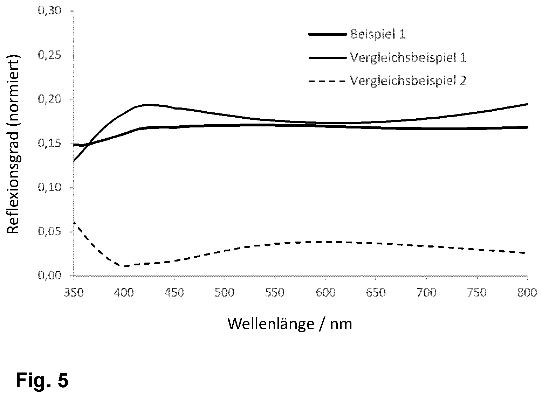

Figur 5 zeigt Reflexionsspektren von Windschutzscheiben 10 wie in Figur 3, jeweils mit einem Schichtaufbau gemäß dem erfindungsgemäßen Beispiel sowie den Vergleichsbeispielen 1 und 2 nach Tabelle 1. Die Reflexionsspektren wurden mit einer Lichtquelle, die im betrachteten Spektralbereich p-polarisierte Strahlung gleichmäßiger Intensität ausstrahlt, aufgenommen, bei Bestrahlung über die Innenscheibe 2 (die sogenannte innenraumseitige Reflexion) unter einem Einstrahlwinkel von 65° zur innenraumseitigen Flächennormalen. Die Reflexionsmessung ist also der Situation in der Projektionsanordnung angenähert.

Bereits aus der graphischen Darstellung der Spektren ist ersichtlich, dass das erfindungsgemäße Beispiel ein gegenüber den Vergleichsbeispielen verbessertes Reflexionsspektrum aufweist. Im Vergleichsbeispiel 1 wird ein ähnlicher Reflexionsgrad erreicht, aber das Reflexionsspektrum ist weniger konstant ("flach"), so dass die HUD-Darstellung weniger farbneutral ausfällt, weil insbesondere die blauen Anteile verstärkt reflektiert werden. Außerdem kann das optische Erscheinungsbild der Windschutzscheibe 10 einen Farbstich aufweisen. Das Vergleichsbeispiel 2 führt nicht zu einem ausreichend hohen Reflexionsgrad zur intensitätsstarken Darstellung einer HUD-Projektion.

Für die Beurteilung der HUD-Darstellung ist der Spektralbereich von 450 nm bis 650 nm besonders interessant, weil übliche HUD-Projektoren 4 Strahlung in diesem Bereich verwenden (RGB: 473 nm, 550 nm, 630 nm). Der gemittelte Reflexionsgrad gegenüber p-polarisierter Strahlung sowie die Differenzen der Maximal- und Minimalwerte zum gemittelten Reflexionsgrad in diesem Spektralbereich sind in Tabelle 2 zusammengefasst. Außerdem ist jeweils die Standardabweichung des Reflexionsspektrums angegeben.

**Tabelle 2**

| | Beispiel | Vergleichsbeispiel 1 | Vergleichsbeispiel 2 |
|---|---|---|---|
| gemittelten Reflexionsgrad gegenüber p-polarisierter Strahlung, 450 nm-650 nm | 17,0% | 17,8% | 3,2% |
| Differenz zwischen dem maximal auftretenden Reflexionsgrad und dem Mittelwert | 0,1% | 1,2% | 0,6% |
| Differenz zwischen dem minimal auftretenden Reflexionsgrad und dem Mittelwert | 0,2% | 0,5% | 1,6% |
| Standardabweichung, 450 nm-650 nm | 0,09% | 0,55% | 0,68% |

Wie aus der graphischen Darstellung der Reflexionsspektren in Figur 5 schon ersichtlich war, führt das Vergleichsbeispiel 1 zu einem ähnlichen gemittelten Reflexionsgrad wie das erfindungsgemäße Beispiel, jedoch zu einer größeren Varianz des Reflexionsgrads. Die HUD-Darstellung ist daher ähnlich intensiv, aber weniger farbneutral. Das Vergleichsbeispiel 2 weist eine viel zu geringen gemittelten Reflexionsgrad auf.

Für die Beurteilung des optischen Gesamteindrucks der Windschutzscheibe 10 ist der gesamte sichtbare Spektralbereich von 380 nm bis 780 nm interessant. Der gemittelte Reflexionsgrad gegenüber p-polarisierter Strahlung sowie die Differenzen der Maximal- und Minimalwerte zum gemittelten Reflexionsgrad in diesem Spektralbereich sind in Tabelle 3 zusammengefasst. Außerdem ist jeweils die Standardabweichung des Reflexionsspektrums angegeben.

**Tabelle 3**

| | Beispiel | Vergleichsbeispiel 1 | Vergleichsbeispiel 2 |
|---|---|---|---|
| gemittelten Reflexionsgrad gegenüber p-polarisierter Strahlung, 380 nm-780 nm | 16,8% | 18,0% | 2,9% |
| Differenz zwischen dem maximal auftretenden Reflexionsgrad und dem Mittelwert | 0,3% | 1,3% | 0,9% |
| Differenz zwischen dem minimal auftretenden Reflexionsgrad und dem Mittelwert | 1,4% | 1,3% | 1,9% |
| Standardabweichung, 380 nm-780 nm | 0,33% | 0,66% | 0,86% |

Wie aus der graphischen Darstellung der Reflexionsspektren in Figur 5 schon ersichtlich war, führt das erfindungsgemäße Beispiel zu einer geringeren Varianz des Reflexionsgrads. Der optische Gesamteindruck ist daher farbneutraler, ein störender Farbstich kann vermieden werden. Alle Scheiben wiesen eine Lichttransmission von größer als 70% auf, so dass sie als Windschutzscheibe eingesetzt werden können.

### Bezugszeichenliste:

- (10): Windschutzscheibe

- (1): Außenscheibe
- (2): Innenscheibe
- (3): thermoplastische Zwischenschicht
- (4): Projektor
- (5): Betrachter / Fahrzeugfahrer
- (20): Reflexionsbeschichtung
(21) elektrisch leitfähige Schicht auf Basis von Silber (Silberschicht)
(22a) erste untere dielektrische Schicht / Entspiegelungsschicht
(22b) zweite untere dielektrische Schicht / Anpassungsschicht
(22c) dritte untere dielektrische Schicht / brechungsindexsteigernde Schicht
(23a) erste obere dielektrische Schicht / Entspiegelungsschicht
(23b) zweite obere dielektrische Schicht / Anpassungsschicht
(23c) dritte obere dielektrische Schicht / brechungsindexsteigernde Schicht
(24) metallische Blockerschicht

- (30): emissivitätsmindernde Beschichtung
(31) elektrisch leitfähige Schicht auf Basis eines TCO (TCO-Schicht)
(32) Blockerschicht gegen Alkalidiffusion
(33) untere Entspiegelungsschicht
(34) Barriereschicht zur Regulierung von Sauerstoffdiffusion
(35) obere Entspiegelungsschicht

- (O): Oberkante der Windschutzscheibe 10
- (U): Unterkante der Windschutzscheibe 10
- (B): HUD-Bereich der Windschutzscheibe 10
- (E): Eyebox

- (I): außenseitige, von der Zwischenschicht 3 abgewandte Oberfläche der Außenscheibe 1
- (II): innenraumseitige, zur Zwischenschicht 3 hingewandte Oberfläche der Außenscheibe 1
- (III): außenseitige, zur Zwischenschicht 3 hingewandte Oberfläche der Innenscheibe 2
- (IV): innenraumseitige, von der Zwischenschicht 3 abgewandte Oberfläche der Innenscheibe 2

## Patentansprüche

1. Projektionsanordnung für ein Head-Up-Display (HUD), mindestens umfassend
- eine Windschutzscheibe (10), umfassend eine Außenscheibe (1) und eine Innenscheibe (2), die über eine thermoplastische Zwischenschicht (3) miteinander verbunden sind, mit einem HUD-Bereich (B); und
- einen Projektor (4), der auf den HUD-Bereich (B) gerichtet ist und der p-polarisierte Strahlung aussendet;
wobei
- auf der zur Zwischenschicht (3) hingewandten Oberfläche (II, III) der Außenscheibe (1) oder der Innenscheibe (2) oder innerhalb der Zwischenschicht (3) eine Reflexionsbeschichtung (20) angeordnet ist, die geeignet ist, p-polarisierte Strahlung zu reflektieren, und die genau eine elektrisch leitfähige Schicht (21) auf Basis von Silber aufweist; und
- auf der von der Zwischenschicht (3) abgewandten Oberfläche (IV) der Innenscheibe (2) eine emissivitätsmindernde Beschichtung (30) angeordnet ist, die eine elektrisch leitfähige Schicht (31) auf Basis eines transparenten leitfähigen Oxids aufweist.

2. Projektionsanordnung nach Anspruch 1, wobei die Reflexionsbeschichtung (20) derart ausgebildet ist, dass
- unterhalb der elektrisch leitfähigen Schicht (21) eine untere dielektrische Schicht (22a) oder Schichtenfolge (22a, 22b, 22c) angeordnet ist, deren Brechungsindex mindestens 1,9 beträgt, und
- oberhalb der elektrisch leitfähigen Schicht (21) eine obere dielektrische Schicht (23a) oder Schichtenfolge (23a, 23b, 23c) angeordnet ist, deren Brechungsindex mindestens 1,9 beträgt,
wobei das Verhältnis der optischen Dicke der oberen dielektrischen Schicht (23a) oder Schichtenfolge (23a, 23b, 23c) zur optischen Dicke der unteren dielektrischen Schicht (22a) oder Schichtenfolge (22a, 22b, 22c) mindestens 1,7 beträgt.

3. Projektionsanordnung nach Anspruch 2, wobei die optische Dicke der oberen dielektrischen Schicht (23a) oder Schichtenfolge (23a, 23b, 23c) von 100 nm bis 200 nm beträgt und die optische Dicke der unteren dielektrischen Schicht (22a) oder Schichtenfolge (23a, 23b, 23c) von 50 nm bis 120 nm beträgt.

4. Projektionsanordnung nach einem der Ansprüche 1 bis 3, wobei die elektrisch leitfähige Schicht (21) der Reflexionsbeschichtung (20) eine geometrische Dicke von 10 nm bis 14 nm aufweist.

5. Projektionsanordnung nach einem der Ansprüche 1 bis 4, wobei
- unterhalb der elektrisch leitfähigen Schicht (21) der Reflexionsbeschichtung (20) eine erste untere dielektrische Schicht, bevorzugt auf Basis von Siliziumnitrid, eine zweite untere dielektrische Schicht, bevorzugt auf Basis von Zinkoxid, und eine dritte untere dielektrische Schicht, bevorzugt auf Basis eines Silizium-Metall-Mischnitrids, insbesondere Silizium-Zirkonium-Mischnitrid oder Silizium-Hafnium-Mischnitrid, mit einem Brechungsindex von mindestens 1,9 angeordnet sind und/oder
- oberhalb der elektrisch leitfähigen Schicht (21) der Reflexionsbeschichtung (20) eine erste obere dielektrische Schicht, bevorzugt auf Basis von Siliziumnitrid, eine zweite obere dielektrische Schicht, bevorzugt auf Basis von Zinkoxid, und eine dritte obere dielektrische Schicht, bevorzugt auf Basis eines Silizium-Metall-Mischnitrids, insbesondere Silizium-Zirkonium-Mischnitrid oder Silizium-Hafnium-Mischnitrid, mit einem Brechungsindex von mindestens 1,9 angeordnet sind.

6. Projektionsanordnung nach Anspruch 5, wobei die Reflexionsbeschichtung (20) die folgenden Schichten umfasst:
- eine Entspiegelungsschicht (22a) auf Basis von Siliziumnitrid mit einer Dicke von 20 nm bis 30 nm,
- darüber eine brechungsindexsteigernde Schicht (22c) auf Basis von Silizium-Zirkonium-Mischnitrid oder Silizium-Hafnium-Mischnitrid mit einer Dicke von 8 nm bis 12 nm,
- darüber eine Anpassungsschicht (22b) auf Basis von Zinkoxid mit einer Dicke von 8 nm bis 12 nm,
- darüber die elektrisch leitfähige Schicht (21) mit einer Dicke von 11 nm bis 13 nm,
- darüber eine Blockerschicht (24) auf Basis von Ti oder NiCr mit einer Dicke von 0,1 nm bis 0,5 nm,
- darüber eine obere Anpassungsschicht (23b) auf Basis von Zinkoxid mit einer Dicke von 8 nm bis 12 nm,
- darüber eine obere brechungsindexsteigernde Schicht (23c) auf Basis von Silizium-Zirkonium-Mischnitrid oder Silizium-Hafnium-Mischnitrid mit einer Dicke von 8 nm bis 12 nm,
- darüber eine obere Entspiegelungsschicht (23a) auf Basis von Siliziumnitrid mit einer Dicke von 60 nm bis 70 nm.

7. Projektionsanordnung nach einem der Ansprüche 1 bis 6, wobei die Reflexionsbeschichtung (20) mindestens eine metallische Blockerschicht (24) umfasst, die direkt oberhalb und/oder unterhalb der elektrisch leitfähigen Schicht (21) angeordnet ist und eine geometrische Dicke von weniger als 1 nm aufweist.

8. Projektionsanordnung nach einem der Ansprüche 1 bis 7, wobei die elektrisch leitfähige Schicht (31) der emissivitätsmindernden Beschichtung (30) auf Basis von Indium-Zinnoxid (ITO) ausgebildet ist und eine Dicke von 50 nm bis 130 nm aufweist, bevorzugt von 60 nm bis 100 nm.

9. Projektionsanordnung nach einem der Ansprüche 1 bis 8, wobei die emissivitätsmindernde Beschichtung (30)
- eine Blockerschicht (32) gegen Alkalidiffusion mit einem Brechungsindex von mindestens 1,9,
- darüber eine dielektrische untere Entspiegelungsschicht (33) mit einem Brechungsindex von 1,3 bis 1,8,
- darüber die elektrisch leitfähige Schicht (31),
- darüber eine dielektrische Barriereschicht (34) zur Regulierung von Sauerstoffdiffusion mit einem Brechungsindex von mindestens 1,9 und
- darüber eine dielektrische obere Entspiegelungsschicht (35) mit einem Brechungsindex von 1,3 bis 1,8 umfasst.

10. Projektionsanordnung nach Anspruch 9, wobei
- die untere Entspiegelungsschicht (33) und die obere Entspiegelungsschicht (35) auf Basis eines Oxids ausgebildet sind, bevorzugt auf Basis von Siliziumoxid,
- die untere Entspiegelungsschicht (33) eine Dicke von 5 nm bis 50 nm und
- die obere Entspiegelungsschicht (6) eine Dicke von 10 nm bis 100 nm aufweist.

11. Projektionsanordnung nach Anspruch 9 oder 10, wobei die Barriereschicht (34) auf Basis eines Nitrids oder eines Carbids ausgebildet ist, bevorzugt auf Basis von Siliziumnitrid oder Siliziumcarbid, und eine Dicke von 5 nm bis 20 nm aufweist.

12. Projektionsanordnung nach einem der Ansprüche 9 bis 11, wobei die Blockerschicht (32) auf Basis eines Nitrids ausgebildet ist, bevorzugt auf Basis von Siliziumnitrid, und eine Dicke von 10 nm bis 50 nm aufweist.

13. Projektionsanordnung nach einem der Ansprüche 9 bis 12, wobei die Windschutzscheibe (10) einen Bereich aufweist, in dem die Zwischenschicht (3) getönt oder gefärbt ist.

14. Projektionsanordnung nach einem der Ansprüche 1 bis 13, wobei die Außenscheibe (1) getönt oder gefärbt ist und eine Lichttransmission von mindestens 80% aufweist, bestimmt wie in der Beschreibung angegeben.

15. Projektionsanordnung nach einem der Ansprüche 1 bis 14, wobei die externen Oberflächen (I, IV) der Windschutzscheibe (10) im Wesentlichen parallel zueinander angeordnet sind.

## Claims

1. Projection assembly for a head-up display (HUD), at least comprising
- a windscreen (10), comprising an outer pane (1) and an inner pane (2) that are joined to one another via a thermoplastic intermediate layer (3), having a HUD region (B); and
- a projector (4) that is directed at the HUD region (B) and that emits p-polarised radiation;
wherein
- a reflection coating (20) is arranged on the surface (II, III) of the outer pane (1) or of the inner pane (2) facing the intermediate layer (3) or within the intermediate layer (3), which reflection coating (20) is suitable for reflecting p-polarised radiation and which has exactly one electrically conductive layer (21) based on silver;
- an emissivity-reducing coating (30) is arranged on the surface (IV) of the inner pane (2) facing away from the intermediate layer (3), which coating (30) has an electrically conductive layer (31) based on a transparent conductive oxide.

2. Projection assembly according to claim 1, wherein the reflection coating (20) is implemented such that
- below the electrically conductive layer (21), a lower dielectric layer (22a) or layer sequence (22a, 22b, 22c) is arranged, whose refractive index is at least 1.9, and
- above the electrically conductive layer (21), an upper dielectric layer (23a) or layer sequence (23a, 23b, 23c) is arranged, whose refractive index at least 1.9,
wherein the ratio of the optical thickness of the upper dielectric layer (23a) or layer sequence (23a, 23b, 23c) to the optical thickness of the lower dielectric layer (22a) or layer sequence (22a, 22b, 22c) is at least 1.7.

3. Projection assembly according to claim 2, wherein the optical thickness of the upper dielectric layer (23a) or layer sequence (23a, 23b, 23c) is from 100 nm to 200 nm and the optical thickness of the lower dielectric layer (22a) or layer sequence (23a, 23b, 23c) is from 50 nm to 120 nm.

4. Projection assembly according to one of claims 1 through 3, wherein the electrically conductive layer (21) of the reflection coating (20) has a geometric thickness from 10 nm to 14 nm.

5. Projection assembly according to one of claims 1 through 4, wherein
- below the electrically conductive layer (21) of the reflection coating (20), a first lower dielectric layer, preferably based on silicon nitride, a second lower dielectric layer, preferably based on zinc oxide, and a third lower dielectric layer, preferably based on a mixed silicon-metal nitride, in particular mixed silicon-zirconium nitride or mixed silicon-hafnium nitride, with a refractive index of at least 1.9 are arranged, and/or
- above the electrically conductive layer (21) of the reflection coating (20), a first upper dielectric layer, preferably based on silicon nitride, a second upper dielectric layer, preferably based on zinc oxide, and a third upper dielectric layer, preferably based on a mixed silicon-metal nitride, in particular mixed silicon-zirconium nitride or mixed silicon-hafnium nitride, with a refractive index of at least 1.9 are arranged.

6. Projection assembly according to claim 5, wherein the reflection coating (20) comprises the following layers:
- an antireflection layer (22a) based on silicon nitride with a thickness from 20 nm to 30 nm,
- above that, a refractive-index-enhancing layer (22c) based on mixed silicon-zirconium nitride or mixed silicon-hafnium nitride with a thickness from 8 nm to 12 nm,
- above that, a matching layer (22b) based on zinc oxide with a thickness from 8 nm to 12 nm,
- above that, the electrically conductive layer (21) with a thickness from 11 nm to 13 nm,
- above that, a blocking layer (24) based on Ti or NiCr with a thickness from 0.1 nm to 0.5 nm,
- above that, an upper matching layer (23b) based on zinc oxide with a thickness from 8 nm to 12 nm,
- above that, an upper refractive-index-enhancing layer (23c) based on mixed silicon-zirconium nitride or mixed silicon-hafnium nitride with a thickness from 8 nm to 12 nm,
- above that, an upper antireflection layer (23a) based on silicon nitride with a thickness from 60 nm to 70 nm.

7. Projection assembly according to one of claims 1 through 6, wherein the reflection coating (20) includes at least one metallic blocking layer (24) that is arranged directly above and/or below the electrically conductive layer (21) and has a geometric thickness of less than 1 nm.

8. Projection assembly according to one of claims 1 through 7, wherein the electrically conductive layer (31) of the emissivity-reducing coating (30) is based on indium tin oxide (ITO) and has a thickness from 50 nm to 130 nm, preferably from 60 nm to 100 nm.

9. Projection assembly according to one of claims 1 through 8, wherein the emissivity-reducing coating (30) comprises
- a blocking layer (32) against alkali diffusion with a refractive index of at least 1.9,
- above that, a dielectric lower antireflection layer (33) with a refractive index from 1.3 to 1.8,
- above that, the electrically conductive layer (31),
- above that, a dielectric barrier layer (34) for regulating oxygen diffusion with a refractive index of at least 1.9, and
- above that, a dielectric upper antireflection layer (35) with a refractive index from 1.3 to 1.8.

10. Projection assembly according to claim 9, wherein
- the lower antireflection layer (33) and the upper antireflection layer (35) are based on an oxide, preferably based on silicon oxide,
- the lower antireflection layer (33) has a thickness from 5 nm to 50 nm, and
- the upper antireflection layer (6) has a thickness from 10 nm to 100 nm.

11. Projection assembly according to claim 9 or 10, wherein the barrier layer (34) is based on a nitride or a carbide, preferably based on silicon nitride or silicon carbide, and has a thickness from 5 nm to 20 nm.

12. Projection assembly according to one of claims 9 through 11, wherein the blocking layer (32) is based on a nitride, preferably based on silicon nitride, and has a thickness from 10 nm to 50 nm.

13. Projection assembly according to one of claims 9 through 12, wherein the windscreen (10) has a region, in which the intermediate layer (3) is tinted or coloured.

14. Projection assembly according to one of claims 1 through 13, wherein the outer pane (1) is tinted or coloured and has light transmittance of at least 80%, measured as specified in the description.

15. Projection assembly according to one of claims 1 through 14, wherein the external surfaces (I, IV) of the windscreen (10) are arranged substantially parallel to one another.

## Revendications

1. Agencement de projection pour un affichage tête haute (HUD), comprenant au moins
- un pare-brise (10), comprenant une vitre externe (1) et une vitre interne (2) qui sont reliées entre elles par l'intermédiaire d'une couche intermédiaire (3) thermoplastique, le pare-brise comportant une zone HUD (B) ; et
- un projecteur (4) qui est dirigé vers la zone HUD (B) et qui émet un rayonnement polarisé p ;
dans lequel
- sur la surface (II, III) de la vitre externe (1) ou de la vitre interne (2) tournée vers la couche intermédiaire (3), ou à l'intérieur de la couche intermédiaire (3), est disposé un revêtement réfléchissant (20) qui est apte à réfléchir un rayonnement polarisé p, et qui présente exactement une couche électroconductrice (21) à base d'argent ; et
- sur la surface (IV) de la vitre interne (2) opposée à la couche intermédiaire (3) est disposé un revêtement réduisant l'émissivité (30), lequel présente une couche électroconductrice (31) à base d'un oxyde conducteur transparent.

2. Agencement de projection selon la revendication 1, dans lequel le revêtement réfléchissant (20) est réalisé de telle sorte que
- en dessous de la couche électroconductrice (21) est disposée une couche (22a) ou succession de couches (22a, 22b, 22c) diélectriques inférieures dont l'indice de réfraction est d'au moins 1,9, et
- au-dessus de la couche électroconductrice (21) est disposée une couche (23a) ou succession de couches (23a, 23b, 23c) diélectriques supérieures dont l'indice de réfraction est d'au moins 1,9,
dans lequel le rapport entre l'épaisseur optique de la couche (23a) ou succession de couches (23a, 23b, 23c) diélectriques supérieures et l'épaisseur optique de la couche (22a) ou succession de couches (22a, 22b, 22c) diélectriques inférieures est d'au moins 1,7.

3. Agencement de projection selon la revendication 2, dans lequel l'épaisseur optique de la couche (23a) ou succession de couches (23a, 23b, 23c) diélectriques supérieures va de 100 nm à 200 nm et l'épaisseur optique de la couche (22a) ou succession de couches (23a, 23b, 23c) diélectriques inférieures va de 50 nm à 120 nm.

4. Agencement de projection selon l'une des revendications 1 à 3, dans lequel la couche électroconductrice (21) du revêtement réfléchissant (20) présente une épaisseur géométrique allant de 10 nm à 14 nm.

5. Agencement de projection selon l'une des revendications 1 à 4, dans lequel
- en dessous de la couche électroconductrice (21) du revêtement réfléchissant (20) sont disposées une première couche diélectrique inférieure, de préférence à base de nitrure de silicium, une deuxième couche diélectrique inférieure, de préférence à base d'oxyde de zinc, et une troisième couche diélectrique inférieure, de préférence à base d'un nitrure mixte silicium-métal, en particulier d'un nitrure mixte silicium-zirconium ou d'un nitrure mixte silicium-hafnium, comportant un indice de réfraction d'au moins 1,9, et/ou
- au-dessus de la couche électroconductrice (21) du revêtement réfléchissant (20) sont disposées une première couche diélectrique supérieure, de préférence à base de nitrure de silicium, une deuxième couche diélectrique supérieure, de préférence à base d'oxyde de zinc, et une troisième couche diélectrique supérieure, de préférence à base d'un nitrure mixte silicium-métal, en particulier d'un nitrure mixte silicium-zirconium ou d'un nitrure mixte silicium-hafnium, comportant un indice de réfraction d'au moins 1,9.

6. Agencement de projection selon la revendication 5, dans lequel le revêtement réfléchissant (20) comprend les couches suivantes :
- une couche antireflet (22a) à base de nitrure de silicium comportant une épaisseur allant de 20 nm à 30 nm,
- par-dessus, une couche (22c) augmentant l'indice de réfraction, à base d'un nitrure mixte silicium-zirconium ou d'un nitrure mixte silicium-hafnium, comportant une épaisseur allant de 8 nm à 12 nm,
- par-dessus, une couche d'adaptation (22b) à base d'oxyde de zinc comportant une épaisseur allant de 8 nm à 12 nm,
- par-dessus, la couche électroconductrice (21) comportant une épaisseur allant de 11 nm à 13 nm,
- par-dessus, une couche de blocage (24) à base de Ti ou de NiCr comportant une épaisseur allant de 0,1 nm à 0,5 nm,
- par-dessus, une couche d'adaptation supérieure (23b) à base d'oxyde de zinc comportant une épaisseur allant de 8 nm à 12 nm,
- par-dessus, une couche supérieure (23c) augmentant l'indice de réfraction, à base d'un nitrure mixte silicium-zirconium ou d'un nitrure mixte silicium-hafnium, comportant une épaisseur allant de 8 nm à 12 nm,
- par-dessus, une couche antireflet supérieure (23a) à base de nitrure de silicium comportant une épaisseur allant de 60 nm à 70 nm.

7. Agencement de projection selon l'une des revendications 1 à 6, dans lequel le revêtement réfléchissant (20) comprend au moins une couche de blocage métallique (24) qui est disposée directement au-dessus et/ou en dessous de la couche électroconductrice (21) et qui présente une épaisseur géométrique inférieure à 1 nm.

8. Agencement de projection selon l'une des revendications 1 à 7, dans lequel la couche électroconductrice (31) du revêtement réduisant l'émissivité (30) est à base d'oxyde d'indium-étain (ITO) et présente une épaisseur allant de 50 nm à 130 nm, de préférence allant de 60 nm à 100 nm.

9. Agencement de projection selon l'une des revendications 1 à 8, dans lequel le revêtement réduisant l'émissivité (30) comprend
- une couche de blocage (32) contre la diffusion des alcalis, comportant un indice de réfraction d'au moins 1,9,
- par-dessus, une couche antireflet diélectrique inférieure (33) comportant un indice de réfraction allant de 1,3 à 1,8,
- par-dessus, la couche électroconductrice (31),
- par-dessus, une couche barrière diélectrique (34) destinée à réguler la diffusion de l'oxygène, comportant un indice de réfraction d'au moins 1,9, et
- par-dessus, une couche antireflet diélectrique supérieure (35) comportant un indice de réfraction allant de 1,3 à 1,8.

10. Agencement de projection selon la revendication 9, dans lequel
- la couche antireflet inférieure (33) et la couche antireflet supérieure (35) sont à base d'un oxyde, de préférence à base d'oxyde de silicium,
- la couche antireflet inférieure (33) présente une épaisseur allant de 5 nm à 50 nm et
- la couche antireflet supérieure (6) présente une épaisseur allant de 10 nm à 100 nm.

11. Agencement de projection selon la revendication 9 ou 10, dans lequel la couche barrière (34) est à base d'un nitrure ou d'un carbure, de préférence à base de nitrure de silicium ou de carbure de silicium, et présente une épaisseur allant de 5 nm à 20 nm.

12. Agencement de projection selon l'une des revendications 9 à 11, dans lequel la couche de blocage (32) est à base d'un nitrure, de préférence à base de nitrure de silicium, et présente une épaisseur allant de 10 nm à 50 nm.

13. Agencement de projection selon l'une des revendications 9 à 12, dans lequel le pare-brise (10) présente une zone dans laquelle la couche intermédiaire (3) est teintée ou colorée.

14. Agencement de projection selon l'une des revendications 1 à 13, dans lequel la vitre externe (1) est teintée ou colorée et présente une transmission de lumière d'au moins 80 %, déterminée comme indiqué dans la description.

15. Agencement de projection selon l'une des revendications 1 à 14, dans lequel les surfaces externes (I, IV) du pare-brise (10) sont disposées de manière à être sensiblement parallèles entre elles.
